(19) Europäisches Patentamt
European Patent Office
Office européen des brevets

(11) **EP 3 679 567 B1**

(12) **EUROPEAN PATENT SPECIFICATION**

(45) Date of publication and mention
of the grant of the patent:
**05.06.2024 Bulletin 2024/23**

(21) Application number: **17924322.5**

(22) Date of filing: **08.09.2017**

(51) International Patent Classification (IPC):
*G09B 19/00* (2006.01)

(52) Cooperative Patent Classification (CPC):
**G09B 19/0038**

(86) International application number:
**PCT/CN2017/100976**

(87) International publication number:
**WO 2019/047135 (14.03.2019 Gazette 2019/11)**

(54) **SENSOR-DERIVED SWING HIT AND DIRECTION DETECTION**

VON SENSOR ABGELEITETE SCHWUNG- UND RICHTUNGSDETEKTION

DÉTECTION PAR CAPTEURS D'UNE FRAPPE APRÈS SWING ET D'UNE DIRECTION DE SWING

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.07.2020 Bulletin 2020/29**

(73) Proprietor: **INTEL Corporation
Santa Clara, CA 95054 (US)**

(72) Inventors:
• **FANG, Yikai
Beijing 100190 (CN)**
• **TONG, Xiaofeng
Beijing 100096 (CN)**
• **ZHANG, Lidan
Beijing 100080 (CN)**
• **LI, Qiang Eric
Beijing 100028 (CN)**
• **LI, Wenlong
Beijing 100028 (CN)**

(74) Representative: **Rummler, Felix
Maucher Jenkins
Seventh Floor Offices
Artillery House
11-19 Artillery Row
London SW1P 1RT (GB)**

(56) References cited:
WO-A1-2016/101131    CN-A- 104 001 330
US-A1- 2002 077 189    US-A1- 2015 107 358
US-A1- 2017 061 817    US-A1- 2017 061 817

• **ZHENYU HE ET AL: "Activity recognition from
acceleration data based on discrete consine
transform and SVM", SYSTEMS, MAN AND
CYBERNETICS, 2009. SMC 2009. IEEE
INTERNATIONAL CONFERENCE ON, IEEE,
PISCATAWAY, NJ, USA, 11 October 2009
(2009-10-11), pages 5041-5044, XP031574682,
ISBN: 978-1-4244-2793-2**
• **Anonymous: "Support-vector machine -
Wikipedia", , 1 September 2017 (2017-09-01),
XP055781727, Retrieved from the Internet:
URL:https://en.wikipedia.org/w/index.php?t
itle=Support-vector_machine&oldid=79830778 2
[retrieved on 2021-03-03]**
• **BISWAS DWAIPAYAN ET AL: "Recognizing
upper limb movements with wrist worn inertial
sensors using k-means clustering
classification", HUMAN MOVEMENT SCIENCE,
vol. 40, 1 April 2015 (2015-04-01), pages 59-76,
XP055781667, AMSTERDAM, NL ISSN:
0167-9457, DOI: 10.1016/j.humov.2014.11.013**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Embodiments described herein generally relate to sports swing analysis and, in some embodiments, more specifically to sensor-derived swing hit and direction detection.

**BACKGROUND**

A swing may be a part of a sport such as baseball and cricket. A swing of a participant may have an impact of performance in the sport. A participant may desire to evaluate the swing to improve performance in the sport. Sensors may collect inertial measurements of a sports swing.

D. Biwas et al. [Human Movement Science 40 (2015) 59-76] discloses a methodology for recognizing movements of the human forearm using pattern recognition applied to the data from a wrist-worn, inertial sensor.

Z. He et al. [Processing of the 2009 IEEE Int. Conf. on Systems, Man and Cybernetics] describes a human activity recognition system based on single tri-axis accelerometer for use in a naturalistic environment.

US 2017/0061817 A1 describes a movement augmentation system that provides various forms of feedback, including real-time and post-performance for training and rehabilitation.

Wikipedia          [https://en.wikipedia.org/w/index.php?title=Support-vector_machine&oldid=798307782, March 03, 2021] describes support vector machines for supervised learning models with associated learning algorithms that analyse data used for classification and regression analysis.

**SUMMARY OF INVENTION**

The present invention is defined in the independent claims. The dependent claims recite selected optional features. In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

**BRIEF DESCRIPTION OF THE DRAWINGS**

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 is a block diagram of an example of an environment and system for sensor-derived swing hit and direction detection, according to an embodiment.
FIG. 2 is a block diagram of an example of a system for sensor-derived swing hit and direction detection, according to an embodiment.
FIG. 3 illustrates an example of a smart shirt including sensor arrays and a control unit for sensor-derived swing hit and direction detection, according to an embodiment.
FIG. 4 illustrates an example of a set of sensor data for sensor-derived swing hit and direction detection, according to an embodiment.
FIG. 5 illustrates an example of feature extraction of compressed sensor data for sensor-derived swing hit and direction detection, according to an embodiment.
FIG. 6 illustrates an example of compressed sensor data clustering for sensor-derived swing hit and direction detection, according to an embodiment.
FIG. 7 illustrates an example of a segment of swing sensor data for sensor-derived swing hit and direction detection, according to an embodiment.
FIG. 8 illustrates an example of peak and valley point definition for sensor-derived swing hit and direction detection, according to an embodiment.
FIG. 9 illustrates an example of peak and valley point definition in sensor data for sensor-derived swing hit and direction detection, according to an embodiment.
FIG. 10 illustrates an example of burst definition for sensor-derived swing hit and direction detection, according to an embodiment.
FIG. 11 illustrates an example of a peak valley drop definition for sensor-derived swing hit and direction detection, according to an embodiment.
FIG. 12 illustrates an example of magnitude definition for sensor-derived swing hit and direction detection, according to an embodiment.
FIG. 13 illustrates an example of alignment definition for sensor-derived swing hit and direction detection, according to an embodiment.
FIG. 14 illustrates an example of an active range definition for sensor-derived swing hit and direction detection, according to an embodiment.
FIG. 15 illustrates an example of a trajectory of a swing for sensor-derived swing hit and direction detection, according to an embodiment.
FIG. 16 illustrates an example of a swing direction vector generation for sensor-derived swing hit and direction detection, according to an embodiment.
FIG. 17 illustrates an example of a process for sensor-derived swing hit and direction detection, according to an embodiment.
FIG. 18 illustrates an example of a process for detecting a swing for sensor-derived swing hit and direction detection, according to an embodiment.
FIG. 19 illustrates an example of a process for hit detection for sensor-derived swing hit and direction detection, according to an embodiment.

FIG. 20 illustrates an example of a process for swing direction determination for sensor-derived swing hit and direction detection, according to an embodiment.

FIG. 21 illustrates an example of a process for sensor-derived swing hit and direction detection, according to an embodiment.

FIG. 22 is a block diagram illustrating an example of a machine upon which one or more embodiments may be implemented.

## DETAILED DESCRIPTION

Wearable sensor technology has been used in health, sports, and entertainment. In some sports applications, sensor technologies may be used to evaluate performance metrics of a player such as speed and strength and/or may be used to provide guidance for movement.

Swing analysis is important for assistive coaching in related sports. It provides quantized measurements for player performance evaluation and has a fundamental role in personal training data management. Swing, direction, or hit/miss detection, as a basic application, can help implement automatic data annotation and improve training data management. For example, swing and hit detection for baseball can provide an automatic filter to save performance data of only hit swing and skip miss data or non- swing sensor data. It not only brings users convenience in training data management, but also reduce data size in storage and communication. The latter is also significant as wearable sensor units usually has very limited memory and battery.

Traditional techniques may use a nine-axis sensor fixed on a hand of a participant (e.g., a person making a swing, etc.) to measure hand speed at impact. The acceleration and angular acceleration may show sudden changes at the moment of impact. Other traditional techniques may use body sensor networks to find relations between the movements of different body parts. For example, a sensor network consisting of nodes on a chest of the participant, a waist of the participant, a forearm of the participant, and an upper arm of the participant may be used for strength measurements to avoid injury.

Traditional sports sensor products may use sensors mounted on a ball or a bat. For example, sensors may be placed in a basketball to measure arc and depth of a basketball shot. In another example, a sensor may be affixed on a knob of a bat or mounted on a specially designed golf clubs. In these examples, the sensor signal may show sharp changes at the moment of impact and such changes may be detected as a swing. However, traditional techniques may use special accessories to affix sensors to sporting equipment and may pose a challenge when transitioning to swing analysis between sports.

Unlike the sports equipment mounted sensors used in traditional techniques, placing sensor units in clothing may allow for natural transitions to swing analytics in multiple sports. However, the conduction of shock at impact (e.g., during a hit, etc.) may be affected by buffering by a body of the participant. Thus, the corresponding signal pattern may differ from those received using traditional sports equipment mounted sensors. Traditional wearable sensor techniques may provide similar challenges to sports equipment mounted sensors because the sensors may use sport specific accessories to affix a sensor unit tightly in gloves and/or sleeves.

By placing the wearable sensors in an article of clothing (e.g., a shirt, jersey, etc.) sensor arrays may be placed on a wrist of the participant, hip of the participant, and shoulder of a participant along with a control unit. The sensor arrays feature an accelerometer, for example a three-axis accelerometer and may include a variety of sensors such as, for example a three-axis gyroscope, etc. Each sensor array may have a differing configurations. For example, a three-axis accelerometer and a three-axis gyroscope may be mounted in the wrist of the article of clothing while a three-axis accelerometer may be mounted in hip and/or shoulder of the article of clothing. Sensor readings from the sensor arrays may be received by the control unit and may be stored in an included electronic storage medium. The control unit may transmit a sequence of sensor readings to a computing device (e.g., computer, mobile device, tablet, etc.) for future processing.

The sensor arrays may include an inertial measurement unit (IMU) to perform swing analysis including swing detection, hit detection, and swing direction in sports such as baseball, golf, cricket, tennis, etc. The present subject matter includes techniques for swing analysis including swing detection, hit detection, and swing direction determination. Cluster analysis of sensor readings is used to differentiate swing and non-swing for swing detection. A hit may be detected by identifying simultaneous burst in three-axis acceleration and three-axis angular acceleration of a detected swing. Five measurements may be extracted from the sensor readings to quantify the probability of a sample point in sensor reading curves and a quantized score of the measurements may be used to determine whether the swing is a hit or miss. Wrist position may be computed using accelerometer readings and gyroscope readings and a moving trajectory may be generated for the wrist which may be used to detect swing direction (e.g., clock-wise relative to the body of the participant, counter-clockwise relative to the body of the participant, etc.).

Unlike traditional wearable sensors and sports equipment mounted sensors, the present subject matter allows swing analytics across sports using an adaptable sensor configuration. For example, a participant may transition from baseball swing analytics to tennis analytics using the same article of clothing. Further, unlike traditional techniques that may manually annotate swing direction, the present techniques automatically determine the swing direction for the participant which may allow for the automatic generation of swing position models for comparison to proper swing techniques.

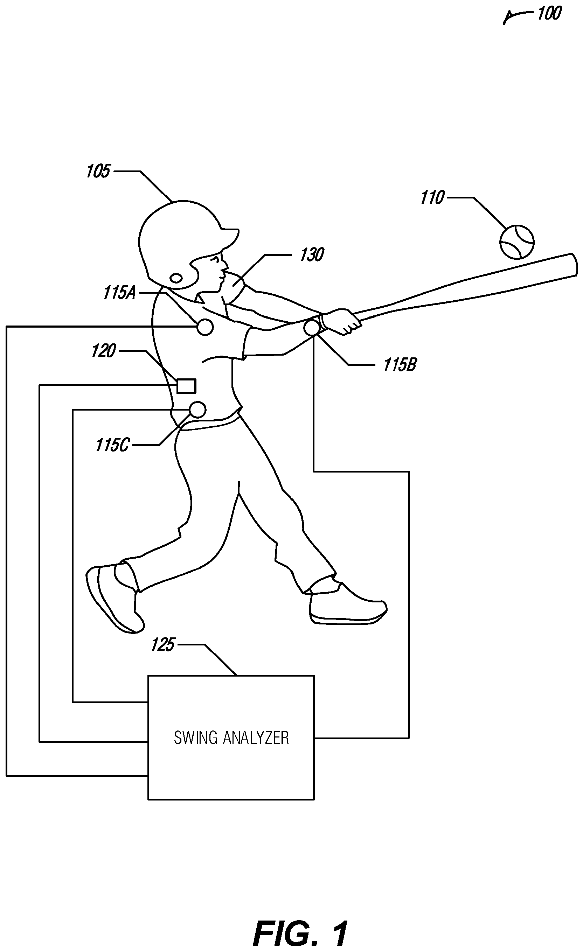

FIG. 1 is a block diagram of an example of an environment 100 and system 125 for sensor-derived swing hit and direction detection, according to an embodiment. The environment 100 may include a participant 105 (e.g., a baseball player, etc.) that may be wearing an article of clothing 130 (e.g., a smart shirt, etc.) including a variety of sensors arrays 115A, 115B, and 115C and a control unit 120. The participant 105 may be swinging at an object 110 (e.g., a baseball, etc.). The control unit 120 and the sensor arrays 115A, 115B, and 115C may be communicatively coupled (e.g., via wireless network, wired network, shared bus, etc.) to a swing analyzer 125. In an example, the swing analyzer 125 may be included with the control unit 120.

The participant 105 may be engaging in a sport that includes a swing component (e.g., baseball, tennis, golf, cricket, etc.). For example, the participant 105 may be playing baseball and may be swinging a bat counterclockwise at a baseball 110 with the intention of hitting the baseball 110. The participant 105 may be wearing the article of clothing 130 that includes a shoulder sensor array 115A, a wrist sensor array 115B, and a waist sensor array 115C, (collectively referred to as sensor arrays 115).

The sensor arrays 115 include an accelerometer and may include a variety of sensors such as, for example, a gyroscope, an inertial measurement unit (IMU), etc. The sensor arrays 115 may take inertial measurements that may indicate movement of a portions of a portion of a body of the participant 105. For example, the wrist sensor array 115B may take inertial measurements indicating movement of a wrist of the participant 105. The sensor arrays 115 may be communicatively coupled (e.g., via wireless network, wired network, radio signal, near field communication, shared bus, etc.) to the control unit 120.

The control unit 120 may select sensors from the sensor arrays 115 that should take measurements. The control unit 120 may identify a sampling interval and other configuration options for sensors in the sensor arrays 115. For example, the control unit 120 may activate an accelerometer in the wrist sensor array 115B to take acceleration measurements at 50 millisecond intervals. The control unit 120 may include a processor and computer readable medium. The computer readable medium may store the instructions (e.g., configuration options, algorithms, sensor control logic, etc.) that the processor may use to perform sensor activation and data collection. The control unit 120 may store the sensor data. The control unit 120 may include a transceiver that may be used to transmit (e.g., via wireless network, wired network, etc.) sensor data to a computing device (e.g., a computer, a mobile device, a tablet, etc.) for future processing.

The swing analyzer 125 may be included with (e.g., stored in the computer readable memory, etc.) the control unit 120 and/or may be included with a computing device (e.g., a mobile device, computer, etc.). The swing analyzer 125 may obtain the sensor data and may process the sensor data to determine a swing, a hit, a direction of a swing, and other swing metrics. The sensor arrays 115 may provide voluminous data and to reduce processing the swing analyzer uses the data compression and clustering to refine data before processing.

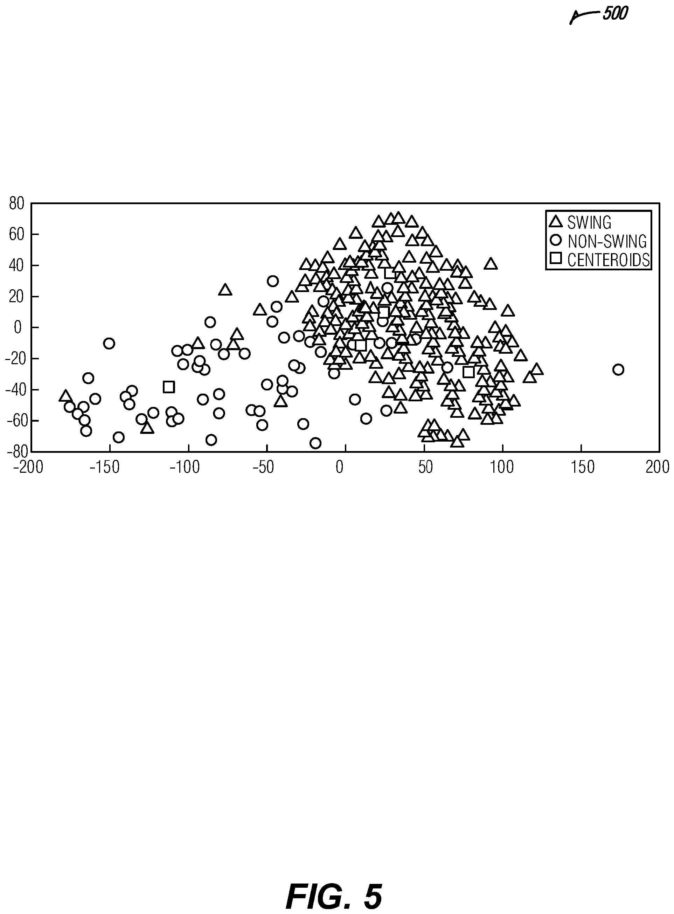

The swing analyzer 125 uses a threshold to determine sensor data to be received (e.g., by the control unit 120). For example, the swing analyzer 125 instructs the control unit 120 to collect sensor data when a magnitude of acceleration of is above a certain value (e.g., above a g-force threshold, etc.). Upon triggering data collection, data collection may proceed for a period of time (e.g., a number of seconds, etc.) and may include a number of sample points. The swing analyzer 125 may obtain sensor data that may include noisy signals triggered by actions other than a swing. For example, the participant 105 may shake the bat which may lead to collection of non-swing sensor data. The swing analyzer 125 further processes the data to identify and discard non-swing sensor data to reduce further processing. Thus, the swing analyzer 125 preprocesses the sensor data, compress the sensor data, extract features from the sensor data, and determine a swing (and data points corresponding with a swing) using clustering (e.g., as shown in FIG. 5).

A swing may consist of a variety of phases. For example, a baseball swing may consist of a stance, a timing, a hitting, a rotation, and impact, and an extension phase. At the beginning of a swing, the participant 105 may be in a swing stance and may be preparing to swing. At the swing stance stage, the sensor outputs may be small and may be static. In preprocessing, the swing analyzer 125 may identify variances in sensor readings (e.g., unexpected spikes in sensor data, etc.) and may eliminate the sensor readings from the sensor data. For example, a baseball swing stance phase may occur at timestamp zero to timestamp fifty and the outputs of the sensor signals may tend to zero between timestamps zero and fifty. The swing analyzer 125 may discard sensor readings occurring from timestamps zero to fifty that demonstrate large variance or value as non-swing sensor readings. Thus, the non-swing sensor readings may not be further processed which may reduce overall processing overhead.

The sensor data collected may include a large number of measurements. For example, the sensor arrays 115 may each include four sensors each measuring data along three axes with two hundred fifty measurements per sequence resulting in a dimension of three thousand. To reduce processing load, the swing analyzer compresses the sensor data to a lower dimensional space. For example, discrete cosine transformation (DCT) may be used to reduce the three thousand dimension data to four hundred thirty-eight dimensions. The swing analyzer 125 may automatically learn the dimension of the lower space so that most of the energies are maintained.

The swing analyzer 125 extracts features from the compressed sensor data.

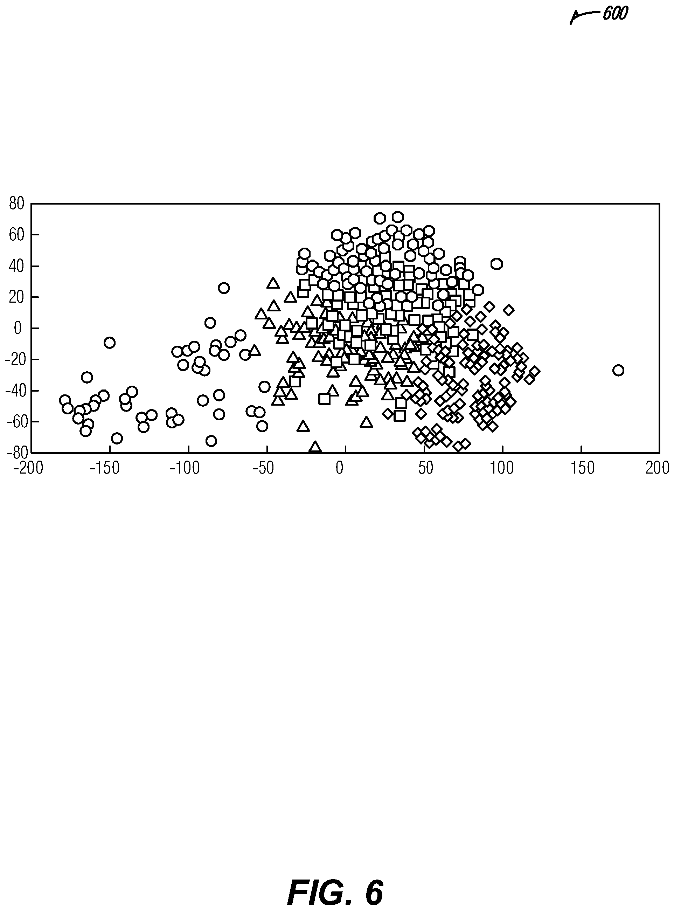

Sorted absolute DCT coefficients may be extracted and principal component analysis (PCA) may be used to project sensor measurements in sixty-five dimensions (e.g., as shown in FIG. 5). The PCA results may be clustered by the swing analyzer 125. For example, the PCA results may be clustered into five clusters using k-means (e.g., as shown in FIG. 6). The swing analyzer 125 may prevent further processing of sensor data samples that are far from other data samples (e.g., as compared to other sensor data samples, etc.) and/or that are in a cluster that is farther away from other clusters. In other words, if a sensor data sample falls outside of the largest cluster of sensor data samples, the swing analyzer may determine the sensor data sample to be a non-swing data sample and it may be prevented from being included in further processing.

In some sports, there may be several types of hits (e.g., contact with an object, etc.) each with different characteristics. For example, in baseball, a player may hit a fly ball with a high positive launch angle, a line drive with a flat launch angle, a ground ball with a negative launch angle, etc. Each hit may have differing effects on the sensor data. Thus, the swing analyzer 125 uses a dynamic hit detection technique to determine a hit has occurred. The swing analyzer 125 may extract peak and valley points from the sensor data as hit candidates and may filter the hit candidates to determine a hit.

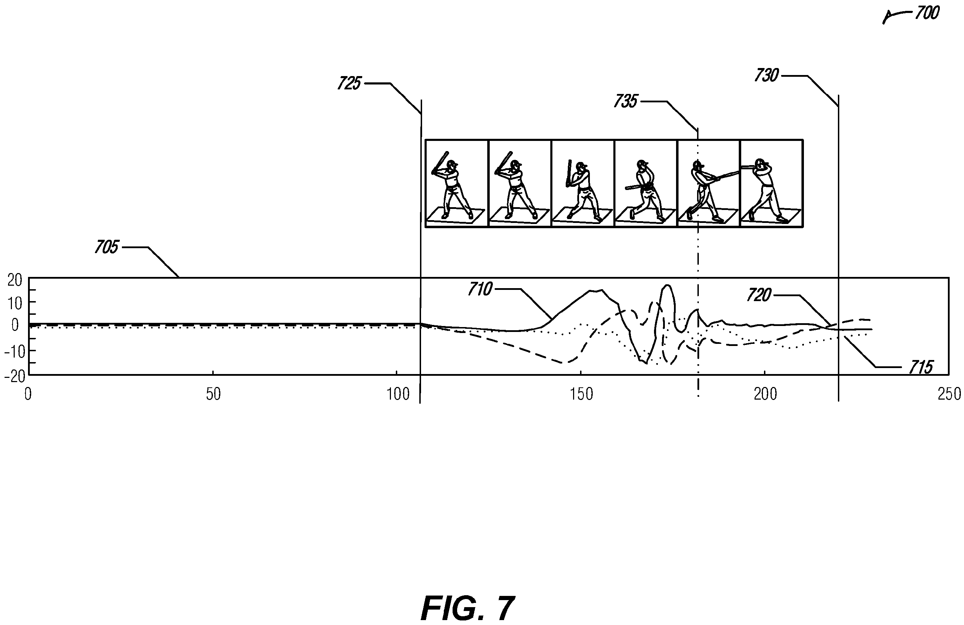

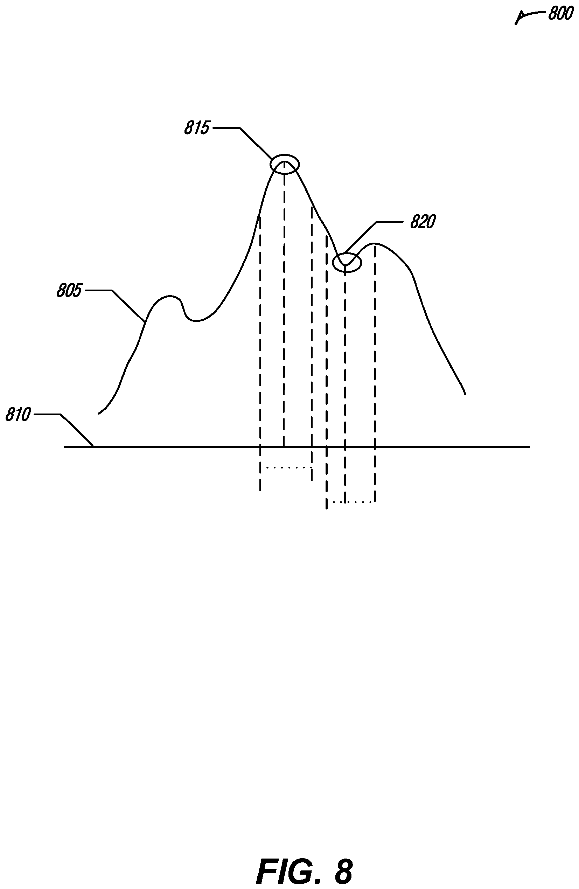

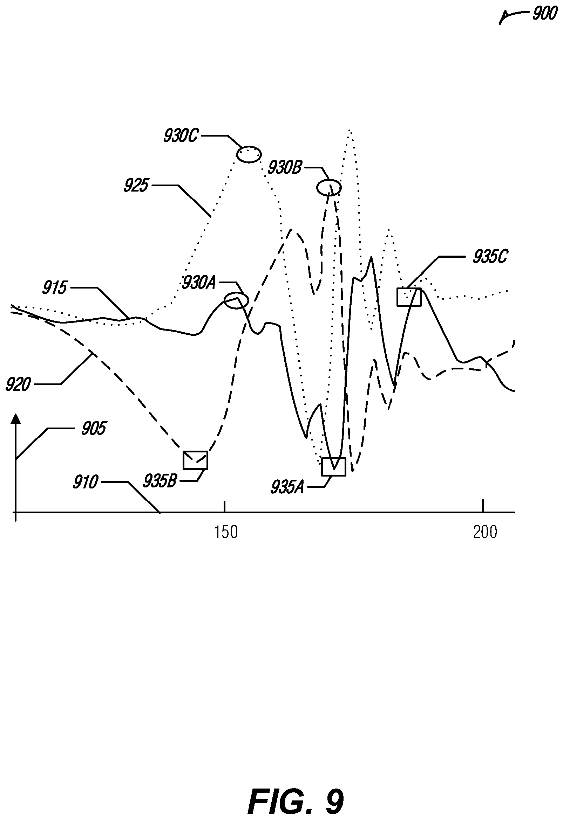

The sensor arrays 115 may collect data through each phase of a swing (e.g., as shown in FIG. 7). The swing analyzer 125 may identify peak and valley points in the sensor data as possible hit points. The peak and valley points may be local minimum and maximum sensor data values in a range (as shown in FIG. 8). The sensor data may include a large number of peak and valley points (as shown in FIG. 9) so the swing analyzer may filter the peak and valley points to refine possible hit candidates.

The swing analyzer 125 may identify measurements and may calculate a score for each candidate using each of the measurements. For example, the swing analyzer may identify a burst measurement, a peak valley drop measurement, a magnitude measurement, an alignment measurement, and a time ratio measurement. The swing analyzer 125 may calculate a score for each measurement and may calculate an aggregate score comprising the measurement scores (e.g., a sum of the measurement scores, etc.).

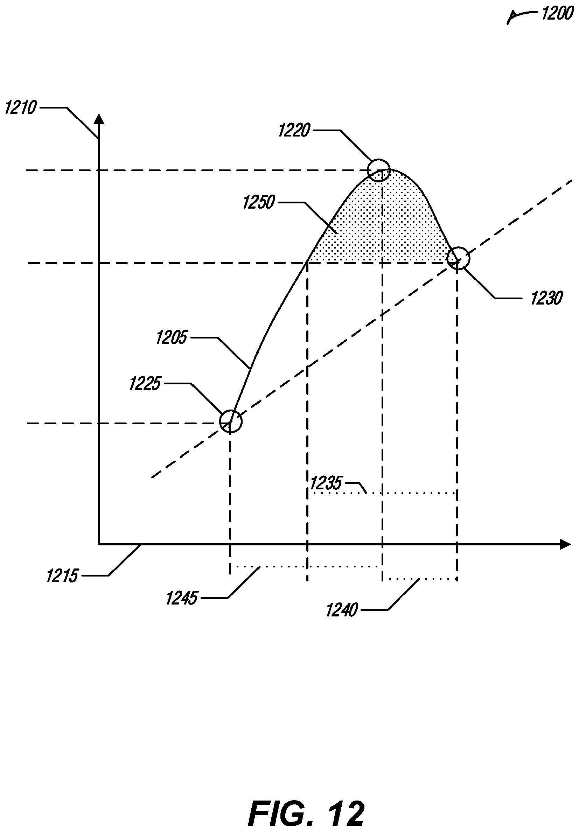

The swing analyzer 125 may calculate a burst measurement as a maximum difference between a peak or valley point and a neighbor sample value on each side of the peak or valley point (e.g., as shown in FIG. 12). The burst measurement may describe a change in acceleration data in the two neighboring sample points.

The swing analyzer 125 may calculate a peak valley (PV) drop measurement for a peak or valley as an average drop between the peak or valley and a neighboring peak or valley on each side of the peak or valley (as shown in FIG> 11). For example, a peak drop value for a peak may be the average drop between the peak and a valley immediately prior to the peak and between the peak and a valley immediately subsequent to the peak. The peak valley drop may be represented as $avg(d_{i,j}, d_{i,k})$ or $(d_{i,j}, d_{i,k})/2$ where $d_{i,j}$ is a drop between the peak or valley and the peak or valley immediately prior to the peak or valley and $d_{i,k}$ is a drop between the peak or valley and the peak or valley immediately subsequent to the peak or valley.

The swing analyzer 125 may calculate a magnitude measurement for the peak or valley as an area below a peak or above a valley in the sensor data curve (e.g., as shown in FIG. 12). For example, for a peak $P_i$, with valley neighbor $V_j$ immediately prior to the peak and valley neighbor $V_k$ immediately subsequent to the peak, the range for magnitude is $2d_{i,k} + 1$ where $d_{i,k}$ is the distance between $P_i$ and $V_k$ where the distance between $P_i$ and $V_k$ is less than the distance between $P_i$ and $V_j$. The range for magnitude measurement may be represented as $2min(d_{i,j}, d_{i,k}) + 1$.

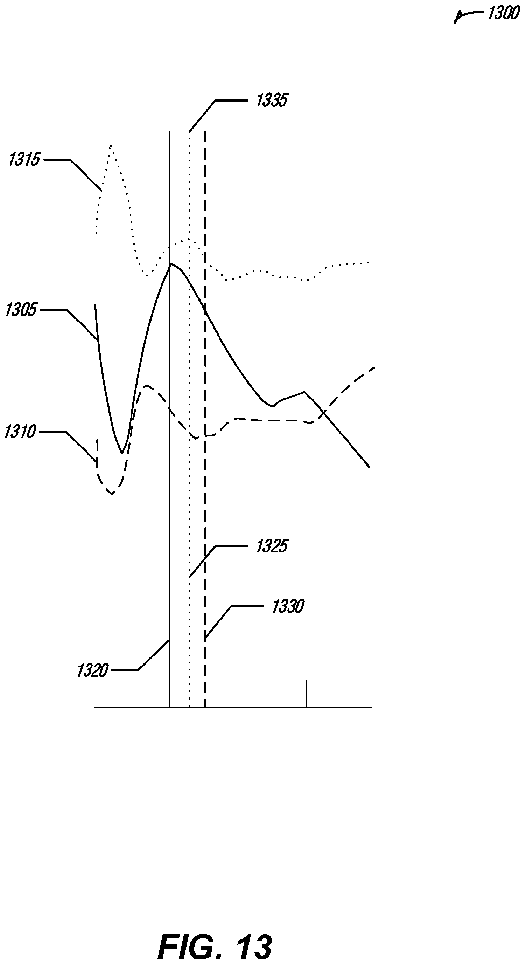

The swing analyzer 125 may calculate an alignment measurement for the peak or valley point. The alignment measurement may describe synchronization of candidates (e.g., peak and valley points) across different axes. The alignment measurement may be calculated as a sum of a distance in time axes (e.g., sample points) of candidates in different axes (as shown in FIG. 13). Alignment for candidate $C$ may be represented as $Align(C) = d_{i,j} + d_{i,k}$ where $d_{i,j}$ is a distance between a candidate on a first axis and the candidate $C$ on a second axis and $d_{i,k}$ is a distance between the candidate on the first axis and a candidate on a third axis.

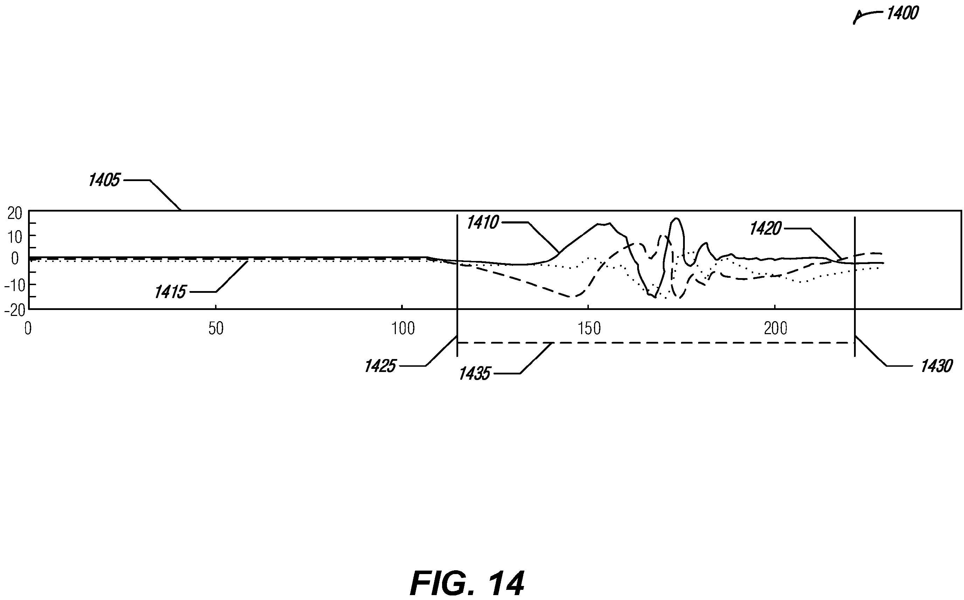

The swing analyzer 125 may calculate a time ratio measurement for the peak or valley. The time ratio may describe timing information of the peak or valley in a time axis of the sensor data. The swing analyzer 125 may determine an active range (e.g., as shown in FIG. 14) for the sensor data to decrease a search space for hit detection as acceleration values near the point of impact may be large. The swing analyzer 125 may calculate an amplitude of three-axis acceleration using equation

$$Am = \sqrt{wax^2 + way^2 + waz^2}$$

. The swing analyzer 125 may identify a start point and an end point of the range. The start point is defined as a first sample point $P_{start}$ where $Am > Th_{acc}$ from sample point zero where $Th_{acc}$ is an acceleration threshold. The end point is defined as the first sample point $P_{end}$ where $Am > Th_{acc}$ from the end sample point in reverse direction. The time ratio is represented as $(P_s - P_{start})/(P_{end} - P_{start})$ where $P_s$ is candidate sample point.

The swing analyzer 125 may evaluate each of the measurements using different scoring functions to determine a score for each measurement. For example, a sigmoid function may be used to calculate a burst score using the burst measurement and an alignment score using the alignment measurement while a piecewise linear function may be used to calculate a magnitude score using the magnitude measurement, a peak value drop score using the peak drop measurement, and a time ratio score using the time ratio measurement. In an example, the measurements are made using accelerometer data and may be gyroscope data. In an example, the magnitude, peak drop, burst, and alignment measurements may be calculated across six-axis sensor data.

The swing analyzer 125 may calculate a total score for each candidate using the individual scores for each measurement. The total score may be represented by equation $S_{all} = s_b(Burst) + s_p(PV) + s_m(Mag) + s_a(Align) + s_t(Timeratio)$. The swing analyzer 125 may compare $S_{all}$ (e.g., the total score) value for the candidate to a threshold to determine if the candidate is a hit. The comparison may be represented as $S_{all} > S_{thresh}$ if the evaluation is positive the candidate may be determined that the candidate represents a hit and if the evaluation is negative it may be determined that the candidate does not represent a hit.

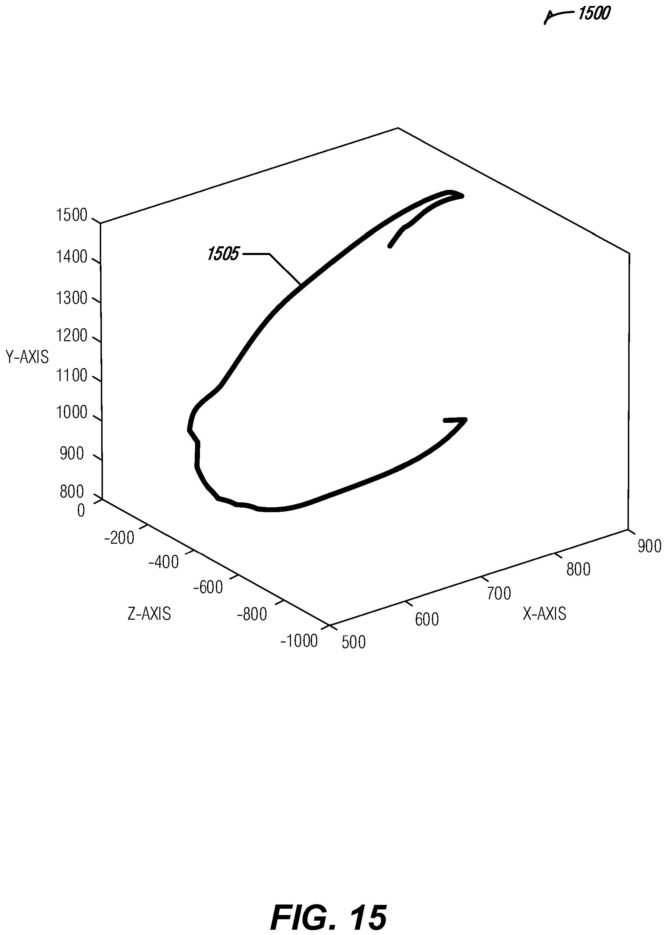

The swing analyzer 125 determines a swing direction for a swing. The swing analyzer 125 obtains sensor data (accelerometer data, optionally gyroscope data, etc.) and calculates acceleration integration along time to determine velocity. The velocity integration may be calculated along time to determine a position of the wrist sensor array 115B at each time stamp (e.g., as shown in FIG. 15).

A swing includes a starting and ending phase and data during the starting and ending phases of the swing may be excluded from the swing data to more efficiently (e.g., through reduced data processing, etc.) determine swing direction. The swing analyzer 125 may remove some data in the starting and ending phases by trimming the beginning and ending data samples. For example, for a sequence with 250 sampling points, data samples with an index ranging from 50 to 200 may be processed while data samples with indexes between 0 and 50 and 200 and 25 may not be processed.

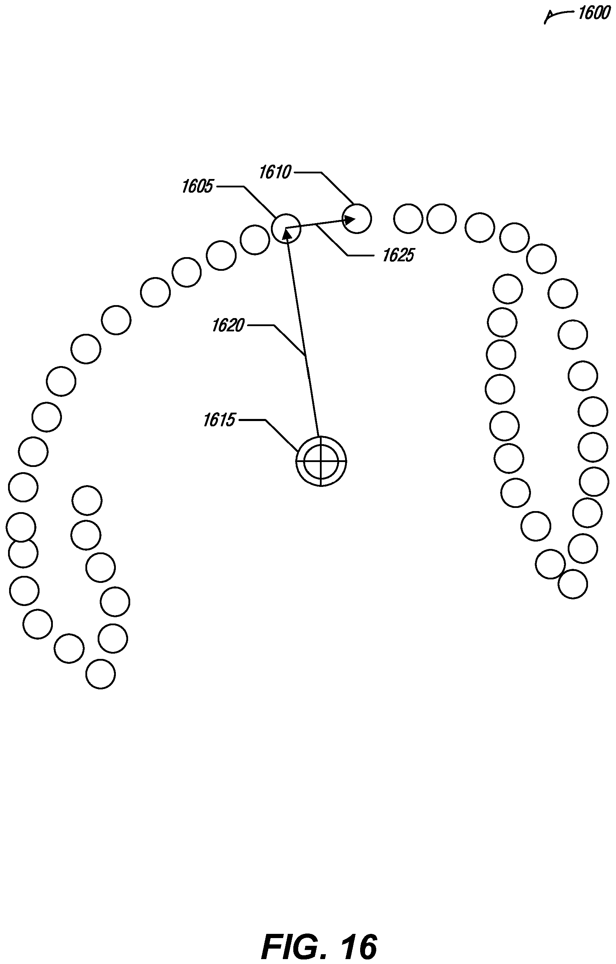

The swing analyzer 125 computes a centroid of the cropped points may use the centroid as an approximation of a body position of the participant. The swing analyzer 125 generates a first vector from the centroid to a sample point of the cropped sample points and a second vector from the sample point to a neighboring sample point (e.g., as shown in FIG. 16). A cross product is calculated using the first vector and the second vector. If the cross product is less than zero swing may be determined to be in a clockwise direction and if the cross product is greater than zero it may be determined that the swing is counterclockwise. Each sample point maybe analyzed and a count of clockwise results and count of counterclockwise results may be maintained and after processing is complete the direction with the higher counter value may be considered to be the direction of the swing.

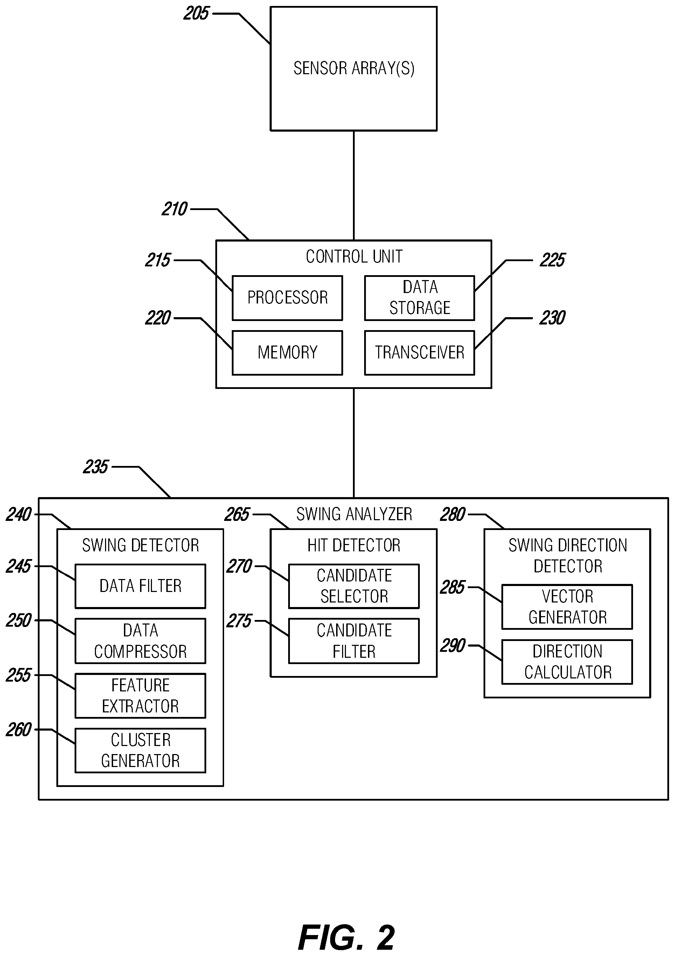

FIG. 2 is a block diagram of an example of a system 200 for sensor-derived swing hit and direction detection, according to an embodiment. The system 200 may provide features as described in FIG 1. The system 200 includes sensor array(s) 205, a control unit 210, and a swing analyzer 235. The control unit 210 may include a processor 215, a memory 220, data storage 225, and transceiver 230. The swing analyzer 235 includes a swing detector 240, may include a hit detector 265, and includes a swing direction detector 280. The swing detector 240 includes a data filter 245, a data compressor 250, a feature extractor 255, and a cluster generator 260. The hit detector 265 may include a candidate selector 270 and a candidate filter 275. The swing direction detector 280 includes a vector generator 285 and a direction calculator 290. The sensor array(s) 205 may be communicatively coupled (e.g., via wired network, wireless network, near filed communication, radio signal, shared bus, etc.) to the control unit 210. The control unit 210 may be communicatively coupled to the swing analyzer 235. In an example, the swing analyzer 235 may be included with the control unit 210 (e.g., as instructions stored in the data storage 225, in the memory 220, etc.).

The sensor array(s) 205 include an accelerometer and may include a variety of sensors including, by way of example and not limitation, a gyroscope, etc. The sensors may measure inertia of the sensors to approximate movement of body parts of a participant of a sport (e.g., participant 105, etc.). The sensor array(s) 205 may be placed in an article of clothing such as a smart shirt, jersey, etc. The sensor array(s) 205 may be positioned in a portion of the article of clothing that may be proximate to a body part for which the sensors are to approximate movement. For example, a sensor array may be placed in a wrist of a shirt to collect inertial measurements for a wrist of the participant, in a shoulder of the shirt to collect inertial measurements for a shoulder of the participant, and in the waist of a shirt to collect inertial measurement for hips of the participant.

The control unit 210 may activate sensors of the sensor array(s) 205 and collects measurements taken by the sensors. For example, instructions stored in the data storage 225 may be loaded into the memory 220 and executed by the processor 215. The instructions may include a variety of control operations such as, by way of example and not limitation, sampling frequencies, input/output logic, sensor configuration information, communication logic, etc.

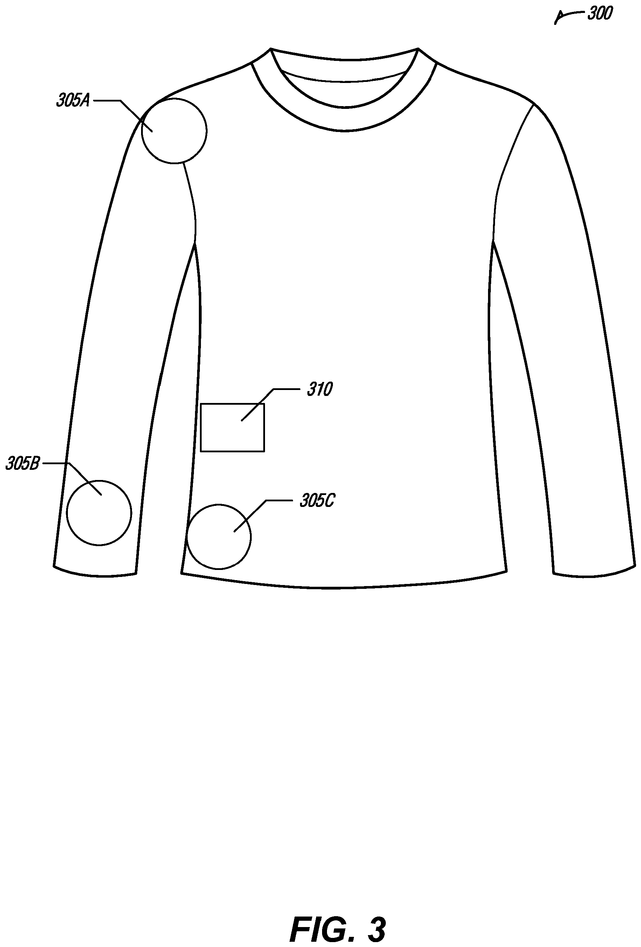

FIG. 3 illustrates an example of a smart shirt 300 including sensor arrays and a control unit for sensor-derived swing hit and direction detection, according to an embodiment. The smart shirt 300 may include sensor arrays 305A, 305B, 305C, and control unit 310. The sensor array 305A may be placed in a shoulder of the smart shirt 300, the sensor array 305B may be placed in a wrist of the smart shirt 300, and the sensor array 305C may be placed in the waist of the smart shirt 300.

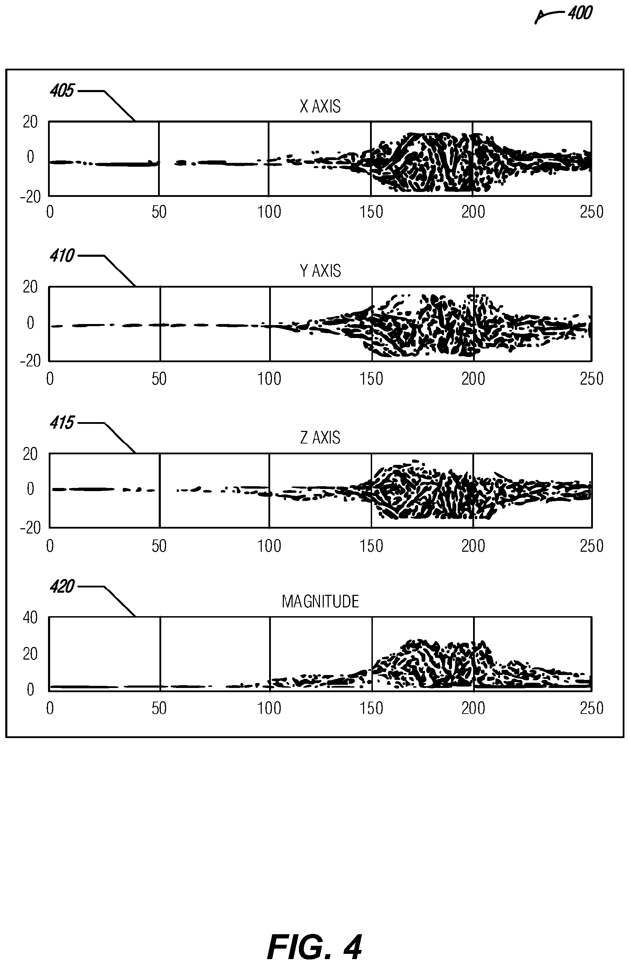

Returning to FIG. 2, the participant may be participating in a sport with a swing component (e.g., baseball, cricket, golf, etc.) and may be wearing the article of clothing including the sensor array(s) 205 (e.g., the smart shirt 300, etc.). The participant may be preparing to make a swing (e.g., to swing a baseball bat at a baseball). The swing analyzer 235 may obtain sensor measurements from the sensor array(s) 205 (e.g., via the control unit 210). FIG. 4 illustrates an example of a set of sensor data 400 including data along an x-axis 405, data along a y-axis 410, data along a z-axis, and magnitude data 420. A similar set of sensor measurement data may be collected for each sensor in the sensor array(s) 235. Returning to FIG. 2, the swing analyzer 235 may use the sensor measurements to detect a swing, hit, and a direction of a swing of the participant. For example, the participant may be playing baseball and may swing a baseball bat at a baseball. The swing analyzer 235 may determine that the participant has made the swing action, whether contact was made with the baseball, and in what direction the participant swung the bat. The swing analyzer 235 includes a number of components including the swing detector 240 (e.g., to detect a swing of the participant), may be the hit detector 265 (e.g., to detect when the participant has made contact with an object such as a baseball), and includes the swing direction detector 280(c.g., to determine a direction of the swing of the participant).

The swing detector 240 includes a variety of components such as the data filter 245, the data compressor 250, the feature extractor 255, and the cluster generator 260. The swing detector 240 may detect that the participant has made a swing (e.g., a baseball swing, etc.). The swing detector 240 obtains sensor readings from the sensor array(s) 205 (e.g., via the control unit 210, etc.).

The data filter 245 may generate a set of sensor values comprising members of the sensor reading on a first side of a threshold. In an example, the threshold may be based on trends in the sensor readings. For example, sensor readings for a time period may tend towards zero and the threshold may be determined to be at a level above zero indicating noise in the sensor readings. For example, a stance phase of a baseball swing the sensor readings may tend towards zero but the participant may shake the baseball bat leading to a short spike in the sensor readings. The spike may be determined to be above the average sensor reading values for the time period and may be excluded from the set of sensor values.

The data compressor 250 compresses the set of sensor values into a first lower dimension. In an example, the set of sensor values may be compresses by applying discrete cosine transformation (DCT) to the set of sensor values. In an example, DCT may concentrate the energy of the set of sensor values into sorted absolute discrete cosine transformation coefficients. For example, six-axis sensor data at a high sampling rate may include a large sample domain and DCT may be applied to the samples to reduce the domain of the sample set. Compressing the sensor values may reduce processing as fewer samples may need to be processed to detect a swing.

The feature extractor 255 extracts features from the compressed set of sensor values. In an example, the feature extractor 255 may extract sorted absolute cosine coefficients. In an example, the feature extractor 255 may use principal component analysis to compress the sorted absolute discrete cosine transformation coefficients into a second lower dimension. This may allow for a further reduction in the number of sample points to be processed. FIG. 5 illustrates an example of feature extraction 500 of compressed sensor data for sensor-derived swing hit and direction detection, according to an embodiment. FIG. 5 shows distribution of samples including swing and non-swing samples. As shown in FIG. 5, most non-swing samples are generally distributed farther from swing samples.

Returning to FIG. 2, the cluster generator 260 clusters the features output by the feature extractor 255 into a set of clusters. In an example, the clusters may generated using k-means (e.g., as shown in FIG. 6). The swing detector 260 analyzes the set of clusters to identify a swing based on a distance between members of the set of clusters. For example, the features may be clustered into five clusters and four of the five clusters may be tightly grouped which may be identified as swing samples while features in a cluster that is distant to the other four clusters may be determined to be non-swing samples. In an example, a swing may be detected if a majority of clusters are tightly grouped. For example, if three of five clusters are tightly grouped the swing detector 240 may determine there has been a swing. FIG. 6 illustrates an example of compressed sensor data clustering 600 for sensor-derived swing hit and direction detection, according to an embodiment. In FIG. 6, each shape represents a different cluster. The circle samples in FIG. 6 represents a non-swing sample cluster while the triangle, square, octagon, and diamond represent swing sample clusters.

Returning to FIG. 2, the hit detector 265 may detect contact with an object (e.g., a bat of the participant hitting a baseball, etc.). The hit detector 265 may include a variety of components such as the candidate selector 270 and the candidate filter 275. The hit detector 265 may identify hit candidate samples and may filter the hit candidate samples to identify a hit. The data may be collected along multiple axes by the sensor array(s) 205. Thus, data along each axis may be analyzed to determine if a hit has occurred.

FIG. 7 illustrates an example of a segment of swing sensor data 700 for sensor-derived swing hit and direction detection, according to an embodiment. The segment of swing sensor data 700 may include sensor data over time 705 along an x-axis 710, a y-axis 715, and a z-axis 720. The sensor data over time 705 may include data for phases of a swing before and after an approximate point of impact 735. A start point 725 in the data at the start of the swing phase may be identified and an end point 730 in the data may be identified. The portion of data between the start point 725 and the end point 730 may be considered to be the swing data. The hit detector 265 may use the data in this region to determine a hit.

Returning to FIG. 2, the candidate selector 270 may identify a first set of peak and valley points, a second set of peak and valley points, and a third set of peak and valley points in the sensor readings. The first set of peak and valley points may correspond to a first axis, the second set of peak and valley points may correspond to a second axis, the third set of peak and valley points may correspond to a third axis. In an example, a range of the sensor readings may be identified between a first point in time when an amplitude of the sensor readings is above a range threshold and a last point in time when the amplitude of the sensor readings is above the range threshold. The first set of peak and valley points, the second set of peak and valley points, and the third set of peak and valley points may be identified in the range of the sensor readings. FIG. 8 illustrates an example of peak and valley point definition 800 for sensor-derived swing hit and direction detection, according to an embodiment. A peak 815 and valley 820 may be identified in sensor curve 805 over time 810.

Returning to FIG. 2, a swing may include a series of phases. For example, a baseball swing may include a stance, a timing, a hitting, a rotation, and impact, and an extension phase. The beginning of the swing phase series may be indicated by a change in sensor readings along each axis. For example, before a swing begins the sensor readings may tend to zero and when the participant enters the swing phase series the sensor reading may become more variable. At the end of the swing phase series, the sensor readings may return to the pre-swing phase series state (e.g., tending to zero, etc.). The variations in the sensor readings may be used to trigger sensor sample collection for the swing phase using a threshold. For example, the threshold may have value and temporal components such as the sensor reading being above (or below) a value of five for more than 500 milliseconds.

The candidate filter 275 may filter members of the first set of peak and valley points, the second set of peak and valley points, and the third set of peak and valley points to identify a set of contact candidate points. FIG. 9 illustrates an example of peak and valley point definition 900 in sensor data for sensor-derived swing hit and direction detection, according to an embodiment. Peaks 930A, 930B, 930C, and valleys 935A, 935B, and 935C may be defined along an x-axis 915, a y-axis 920, and a z-axis 925 at values 905 over time 910. Each peak and valley point may be a hit candidate sample point.

Returning to FIG. 2, in an example, the candidate filter 275 may identify a first difference between a first value of each member of the set of contact candidate points and a second value from the sensor readings for a first point along the axis of the member of the set of contact candidate points and a second difference between the first value and a third value from the sensor readings for a second point along the axis of the member of the set of contact candidate points. The first point may be immediately prior to the member of the set of contact candidate points and the second point may be immediately subsequent to the member of the set of contact candidate points. A burst measurement may be determined for the member of the set of contact candidate points as a maximum of the first distance and the second difference. The burst measurement for each member of the set of contact candidate points may be input into a sigmoid function to determine a burst score for each member of the set of contact candidate points. The burst score may be used in calculating the contact score for each member of the set of contact candidate points.

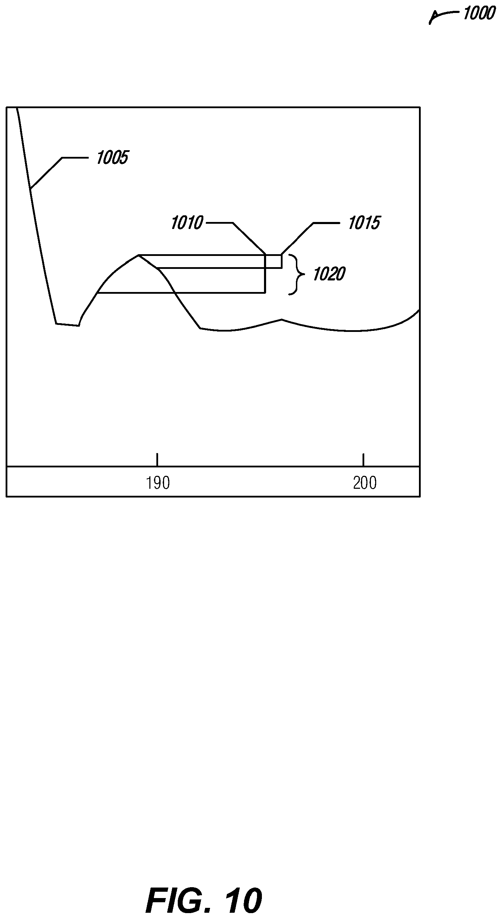

FIG. 10 illustrates an example of burst definition 1000 for sensor-derived swing hit and direction detection, according to an embodiment. The sensor curve 1005 may include a plurality of sample points. The sample points may include peaks and valleys as previously described. A burst measurement may be made for a peak or valley by measuring a first difference $d_{left}$ 1010 between the peak or valley and a neighboring sample point prior to the peak or valley and a second difference $d_{right}$ 1015 between the peak or valley and a sample point subsequent to the peak or valley. The burst measurement may be defined as the maximum 1020 of the first difference and the second difference expressed as $max(d_{left}, d_{right})$.

Returning to FIG. 2, in an example, the candidate filter 275 may calculate, for each member of the set of contact candidate points, a first drop between the member of the set of contact candidate points and a second member of the set of contact candidate points and a second drop between the member of the set of contact candidate points and a third member of the set of contact candidate points. The second member of the set of contact candidate points may be immediately prior to the member of the set of contact candidate points along an axis. The third member of the set of contact candidate points may be immediately subsequent to the member of the set of contact candidate points along the axis. A peak-valley drop measurement may be determined for the member of the set of contact candidate points as an average of the first drop and the second drop. The peak-valley drop measurement for each member of the set of contact candidate points may be input into a piecewise linear function to determine a peak-valley score for each member of the set of contact candidate points. The peak-valley score may be used in calculating the contact score for each member of the set of contact candidate points.

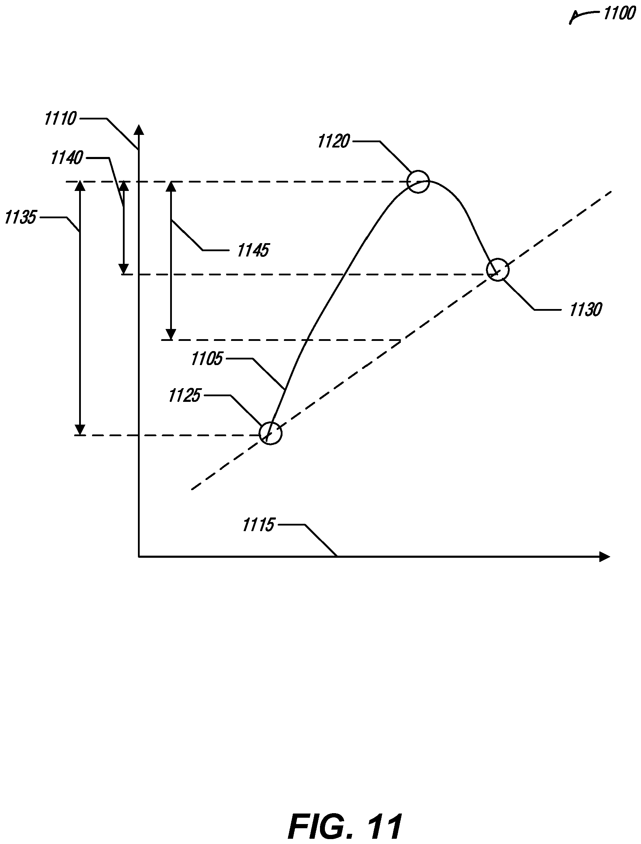

FIG. 11 illustrates an example of a peak valley (PV) drop definition 1100 for sensor-derived swing hit and direction detection, according to an embodiment. The samples may be plotted as a curve expressing sensor values 1110 along time 1115. The PV drop is an average $avg(d_{i,j}, d_{i,k})$ 1145 of a first drop $d_{i,j}$ 1135 between a peak $P_i$ 1120 and a first neighboring valley $V_j$ 1125 prior to the peak $P_i$ 1120 and second drop $d_{i,k}$ 1140 between the peak $P_i$ 1120 and a second neighboring valley $V_k$ 1130 subsequent to the peak. PV drop values may be calculated for valleys in a similar manner by finding the average drop between peaks on each side of the valley and the valley.

Returning to FIG. 2, in an example, the candidate filter 275 may determine, for each member of the set of contact candidate points, a first neighbor candidate of the set of contact candidate points and a second neighbor candidate of the set of contact candidate points. The first neighbor candidate may be immediately prior to the member on an axis. The second neighbor candidate may be immediately subsequent to the member on the axis. A first distance between the member and the first neighbor candidate and a second distance between the member and the second neighbor candidate may be calculated. A range value may be determined as a minimum of the first distance and the second distance. A magnitude measurement may be calculated as an area in a direction from the member to first neighbor candidate with a range of twice the range value plus one. The magnitude measurement for each member of the set of contact candidate points may be input into a piecewise linear function to determine a magnitude score for each member of the set of contact candidate points. The magnitude score may be used in calculating the contact score for each member of the set of contact candidate points.

FIG. 12 illustrates an example of magnitude definition 1200 for sensor-derived swing hit and direction detection, according to an embodiment. The samples may be represented on a sample curve 1205 in reference to sensor values 1210 and time 1215. The magnitude for a peak $P_i$ 1220 with a first neighbor valley $V_j$ 1225 prior to the peak $P_i$ 1220 and a second neighboring valley $V_k$ 1230 subsequent to the peak $P_i$ 1220 is defined as the area below the peak $P_i$ 1220 with a range 1235 of $2min(d_{i,j}, d_{i,k}) + 1$. Where $d_{i,j}$ is a first distance 1245 between the peak $P_i$ 1220 and the first neighbor valley $V_j$ 1225 and $d_{i,k}$ is a second distance 1240 between the peak $P_i$ 1220 and the second neighboring valley $V_k$ 1230. Magnitude may be similarly measured for valleys using the distance between a valley and its neighboring peaks.

Returning to FIG. 2, the candidate filter 275 may calculate a contact score for each member of the set of contact candidate points using a set of scoring criteria. In an example, a first timewise distance and a second timewise distance may be determined for each member of the set of contact candidate points. The first timewise distance may be between the member of the set of contact candidate points along a first axis and a second member of the set of contact candidate points along a second axis. The second timewise distance may be between the member of the set of contact candidate points along the first axis and a third member of the set of contact candidate points along a third axis. An alignment measurement may be determined for the member as a sum of the first timewise distance and the second timewise distance. The alignment measurement for each member of the set of contact candidate points may be input into a sigmoid function to determine an alignment score for each member of the set of contact candidate points. The alignment score may be used in calculating the contact score for each member of the set of contact candidate points.

FIG. 13 illustrates an example of alignment definition 1300 for sensor-derived swing hit and direction detection, according to an embodiment. Alignment describes synchronization of candidate hit points across different axes. The candidate sample points may be distributed along a samples curves for an x-axis 1305, a y-axis 1310, and a z-axis 1315. An alignment measurement for candidate $C$ 1335 may be made by summing a first distance $d_{i,j}$ between a first sample point $i$ 1320 along the x-axis and a second sample point $j$ 1325 along the z-axis and a second distance $d_{i,k}$ between the first sample point $i$ 1320 and a third sample point $k$ 1310 along the y-axis. Thus, the alignment measurement may be expressed as $Align(C) = d_{i,j} + d_{i,k}$.

Returning to FIG. 2, in an example, the candidate filter 275 may identify a range of the sensor readings between a first point in time when an amplitude of the sensor readings is above a range threshold and a last point in time when the amplitude of the sensor readings is above the range threshold. A range time may be calculated as a difference between a first time value corresponding to the last point in time and a second time value corresponding to the first point in time. A time offset may be calculated, for each member of the set of contact candidate points, as a difference between the third time value corresponding to the member and the first time value. A time ratio measurement may be calculated as the quotient of the time offset and the range time. The time ratio measurement for each member of the set of contact candidate points may be input into a piecewise linear function to determine a time ratio score for each member of the set of contact candidate points. The time ratio score may be used in calculating the contact score for each member of the set of contact candidate points.

FIG. 14 illustrates an example of an active range definition 1400 for sensor-derived swing hit and direction detection, according to an embodiment. A sensor reading segment 1405 may include sensor data along an x-axis 1410, a y-axis 1415, and a z-axis 1420. An active range 1420 may be identified for the sensor reading segment 1405 (e.g., corresponding with a swing phase series for a swing, etc.). An amplitude of the three-axis data may be calculated as

$$Am = \sqrt{wax^2 + way^2 + waz^2}$$

where $wax$ is the amplitude of the x-axis 1410, $way$ is the amplitude of the y-axis 1415, and $waz$ is the amplitude of the z-axis 1420. The start point $P_{start}$ 1425 of active range $R_a$ 1435 may be identified by finding the first sample point where $Am > Th_{acc}$ where $Th_{acc}$ is a sample value threshold. The end point $P_{end}$ 1430 of the active range $R_a$ 1435 may be identified by finding the first sample point from the end of the sample data where $Am > Th_{acc}$. A time ratio may be calculated for a sample point $P_s$ using the equation $(P_s - P_{start})/(P_{end} - P_{start})$.

Returning to FIG. 2, the hit detector 265 may combine each measurement score to calculate a total score for each member of the set of contact candidate points. In an example, the total score may be calculated as the sum of the measurement scores $S_{all} = s_b(Burst) + s_p(PV) + s_m(Mag) + s_a(Align) + s_t(Time\ ratio)$. The hit detector 265 may identify a member of the set of contact candidate points as corresponding to contact with an object based on the contact score for the member of the set of contact candidate points being outside of a threshold $S_{all} > S_{thresh}$. For example, $S_{thresh}$ may be 15 and a member of the set of contact candidate points may be identified as a hit if the total score is above 15.

The swing direction detector 280 may detect the direction of a swing. The swing direction detector 280 may include a variety of components such as the vector generator 285 and the direction calculator 290. The swing direction detector 280 may determine a velocity by calculating an acceleration integration along time using the sensor readings (e.g., using accelerometer data, gyroscope data, etc.). The swing direction detector 280 may identify a set of positions of the sensor array(s) 205 (e.g., sensory array 305B as described in FIG. 3, etc.) at corresponding time stamps by calculating velocity integration along time using the velocity. The swing direction detector 280 may reduce the set of positions using a plurality of thresholds. The reduction may reduce processing of samples in phases such as the stance phase where direction data may be less likely to be present. For example, a sequence may have 250 sample points and samples with indexes 50 to 200 may be reserved for processing while samples with indexes from 0 to 49 and 201 to 250 may be disregarded. Thus, processing may be reduced by processing the samples most likely to contain swing direction data.

FIG. 15 illustrates an example of a trajectory 1500 of a swing for sensor-derived swing hit and direction detection, according to an embodiment. The trajectory may include a collection of calculated positions 1505 of a sensor array along an x-axis, y-axis, and z-axis in a three-dimensional space.

Returning to FIG. 3, the vector generator 285 calculates a centroid of the reduced set of positions. The centroid represents the body position of the participant. The vector generator 285 determines a first vector from the centroid to a first position of the reduced set of positions. The vector generator 285 determines a second vector from the first position to a second position of the reduced set of positions. A cross product is calculated for the first vector and the second vector.

FIG. 16 illustrates an example of a swing direction vector generation 1600 for sensor-derived swing hit and direction detection, according to an embodiment. A centroid 1615 may be generated as an approximation of the body position of a participant. A first vector $v_i$ 1620 may be generated from the center of the centroid to a first position $p_i$ 1605. A second vector $v_{i,i+1}$ 1625 may be generated from the first position $p_i$ 1605 to a second position $p_{i+1}$ 1610. A Cross product $c_i$ may be calculated for the first vector $v_i$ 1620 and the second vector $v_{i,i+1}$ 1625. If $c_i < 0$, the direction from the first vector $v_i$ 1620 to the second vector $v_{i,i+1}$ 1625 is clockwise (e.g., a left swing), otherwise, the direction from the first vector $v_i$ 1620 to the second vector $v_{i,i+1}$ 1625 is counterclockwise (e.g., a right swing).

Returning to FIG. 2, the direction calculator 290 determines a direction of the swing using the cross product. In an example, a cross product less than zero may indicate the direction of the swing to be clockwise and cross product greater than or equal to zero may indicate the direction of the swing is counterclockwise. In an example, the direction calculator 290 may establish a counter for clockwise indicating cross products and counterclockwise indicating cross products. The counters may be incremented as positions are analyzed by the vector generator 285. The direction calculator 290 may evaluate the counters when the reduced set of positions has been analyzed. The direction calculator 290 may determine the direction of the swing as counterclockwise if the counterclockwise counter value is greater than the clockwise counter value and may determine the direction of the swing to be clockwise if the clockwise counter value is greater than the counterclockwise counter value.

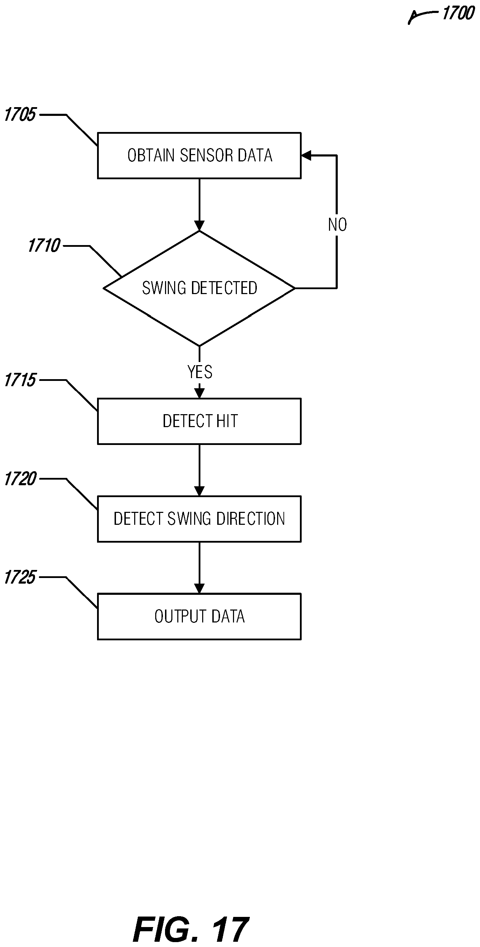

FIG. 17 illustrates an example of a process 1700 for sensor-derived swing hit and direction detection, according to an embodiment. The process 1700 may include features as described in FIGS. 1-16. A participant of a sport with a swing component (e.g., baseball, etc.) may be wearing a smart shirt (e.g., smart shirt 300 as described in FIG. 3, etc.) or other article of clothing including a variety of sensor arrays (e.g., sensor array(s) 205 as described in FIG. 2). Data is obtained from the sensor arrays (e.g., at operation 1705). It may be determined whether the participant has made a swing (e.g., at decision 1710). If a swing has not been detected, sensor data may continue to be monitored (e.g., at operation 1705). If a swing has been detected, the sensor data may be evaluated to determine (e.g., at operation 1715) if the participant made contact with an object (e.g., a baseball, etc.). The sensor data is evaluated to determine a swing direction (e.g., at operation 1720). For example, a right handed baseball batter may swing to the left and a left handed baseball batter may swing to the right. The detection of a swing, detection of a hit, and swing direction may be output along with corresponding data (e.g., at operation 1725). For example, the data may be output to a player modeling system that may use the detections and corresponding data to generate a model of the participant's swing that may be used by the participant to improve swing performance.

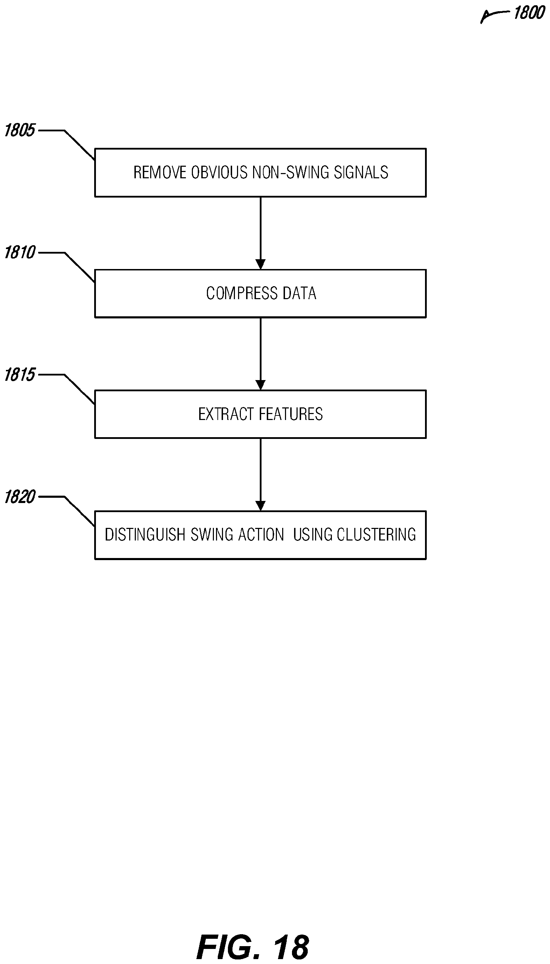

FIG. 18 illustrates an example of a process 1800 for detecting a swing for sensor-derived swing hit and direction detection, according to an embodiment. The process 1800 may include features as described in FIGS. 1-6. A participant may be engaging in a sport with a swing component (e.g., baseball, etc.). The swing may include a series of phases. For example, a baseball swing may include a stance phase, a timing phase, a hitting phase, a rotation phase, an impact phase, and an extension phase. Each phase of the swing series may correspond to data trends in sensor data. For example, in a stance phase of a baseball swing, sensor data may tend to values of zero. Thus, large variances in sensor data during each phase of the swing may be removed as non-swing signals (e.g., at operation 1805). The sensor data may include a large number of samples and processing all of the samples may have an increased processing cost. To address the issue of data volume, the sensor data is compressed (e.g., at operation 1810). For example, discrete cosine transform may be applied to the sensor data to identify signal coefficients that contain possible swing data. Features are extracted from the signals (e.g., at operation 1815). For example, features may be extracted using the signal coefficients (as shown in FIG. 5). The features are clustered (e.g., using k-means, etc.) (as shown in FIG. 6). A swing may be determined using the clustering (e.g., at operation 1820). For example, a concentration of a majority of clusters may indicate the participant has swung.

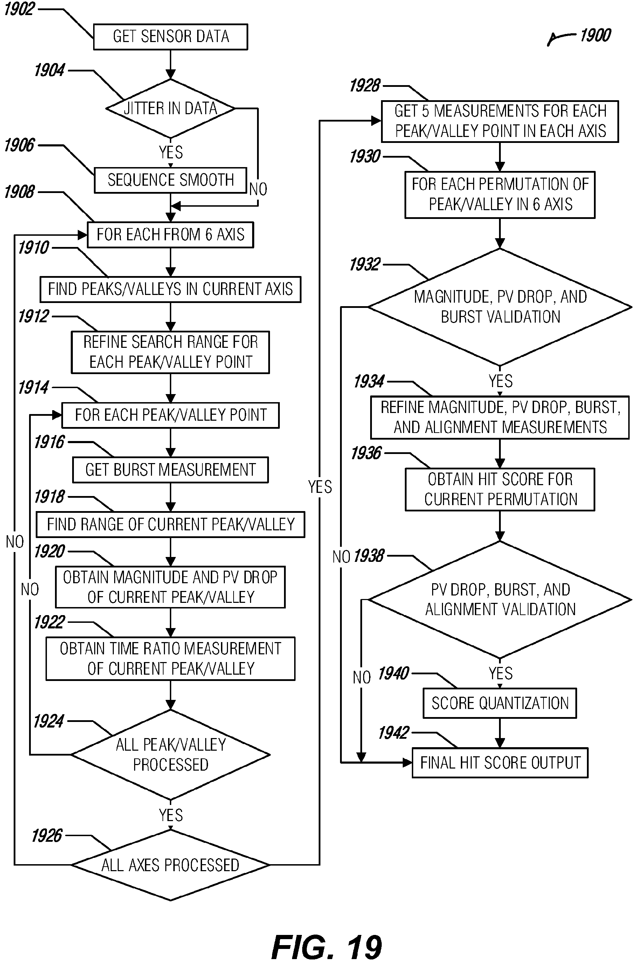

FIG. 19 illustrates an example of a process 1900 for hit detection for sensor-derived swing hit and direction detection, according to an embodiment. The process 1900 may provide features as described in FIGS. 1, 2, and 7-14.

A participant of a sport with a swing component (e.g., baseball, cricket, golf, etc.) may have made a swing (e.g., swung a baseball bat, etc.). The swing has been detected based on analysis of sensor data (e.g., as described in FIGS. 1-6). The sensor data may be analyzed to determine if the participant has made contact with an object (e.g., hit a baseball with the baseball bat, etc.). The sensor data is obtained (e.g., at operation 1902). The sensor data may be evaluated to determine if there is jitter (e.g., unexpected signals, etc.) in the data (e.g., at decision 1904). If the data contains jitter the sensor data sequence may be smoothed (e.g., at operation 1906).

Sensor data along each axis (e.g., six-axis from three-dimensional accelerometer and gyroscope data, etc.) may be processed (e.g., at operation 1908). The sensor data may be evaluated to find peaks and valleys (e.g., local minimum and maximum points in a range of the sensor data, etc.) in sensor data along an axis currently being processed (e.g., at operation 1910). The search range for the peak and valley points may be refined by determining an active range for the sensor data (e.g., at operation 1912). An amplitude may be determined for the sensor data by using the equation

$$Am = \sqrt{wax^2 + way^2 + waz^2}$$

where $wax$ is the amplitude of the x-axis, $way$ is the amplitude of the y-axis, and $waz$ is the amplitude of the z-axis. The start point $P_{start}$ of the active range $R_a$ may be identified by finding the first sample point where $Am > Th_{acc}$ where $Th_{acc}$ is a sample value threshold. The end point $P_{end}$ 1430 of the active range $R_a$ 1435 may be identified by finding the first sample point from the end of the sample data where $Am > Th_{acc}$.

Measurements may be determined for each peak and valley (e.g., at operation 1914). A burst measurement may be calculated for each peak and valley by finding a maximum difference between the peak or valley and a neighbor sample point on each side of the peak or valley (e.g., at operation 1916).

A range may be determined for each peak and valley by finding the a first distance between the peak or valley and a prior neighboring peak or valley and a second distance between the peak or valley and a subsequent neighboring peak or valley and using the equation $2min(d_{i,j}, d_{i,k}) + 1$ where $d_{i,j}$ is the first distance and $d_{i,k}$ is the second distance (e.g., at operation 1918). A magnitude measurement may be determined for each peak and valley as an area below a peak or under a valley with the calculated range for the peak or valley (e.g., at operation 1920).

A peak valley (PV) drop measurement may be calculated for each peak as an average of a first drop between a peak and a prior neighbor valley and a second drop between the peak and a subsequent neighbor valley. A PV drop may be calculated for each valley as an average of a first drop between a prior neighbor peak and the valley and a second drop between a subsequent neighbor peak and the valley (e.g., at operation 1920).

A time ratio measurement may be calculated for each peak and valley using the start and end points of the active range (e.g., calculated at 1912) using the equation $(P_s - P_{start})/(P_{end} - P_{start})$ where $P_s$ is the current peak or valley (e.g., at operation 1922).

It may be determined if all of the peaks and valleys for the current axis have been processed (e.g., at decision 1924). If not, additional peaks and valleys may be processed for the axis (e.g., at operation 1914). If all of the peaks and valleys for the current axis are determined to have been processed, it may be determined if all axes have been processed (e.g., and decision 1926). If not, sensor data for additional axes may be processed (e.g., at operation 1908). If all axes have been processed, an alignment measurement may be calculated for each peak and valley by summing the distance of peaks and valleys along different axes along time. The alignment measurement for a candidate peak or valley on a first axis may be the sum of a first distance between a first closest neighbor peak or valley on a second axis and the candidate peak or valley and a second distance between the first closest neighbor and a second closest neighbor on a third axis. The measurements for each peak and valley along each access may be assembled (e.g., at operation 1928).

Each permutation of peaks and valleys along each axis of the sensor data may be processed for hit scoring (e.g., at operation 1930). It may be determined if the magnitude, PV drop, and burst measurements are valid (e.g., at decision 1932). If the validation fails, an output of no hit may be output (e.g., at operation 1942). If the validation passes, the magnitude, PV drop, burst, and alignment measurements may be refined (e.g., at operation 1934). A hit score (e.g., a total score consisting of a sum of scores for each measurement) may be calculated for the current peak/valley permutation (e.g., at operation 1936). It may be determined if the PV drop, burst, and alignment are valid (e.g., at decision 1938). If the validation fails, an output of no hit may be output (e.g., at operation 1942). If validation passes, the scores for each peak and valley permutation may be quantized (e.g., using thresholds, etc.) to determine if a hit has occurred (e.g., at operation 1940). The final hit score may be output indicating whether a hit has occurred and at what point (e.g., time stamp, etc.) in the sensor data (e.g., at operation 1942).

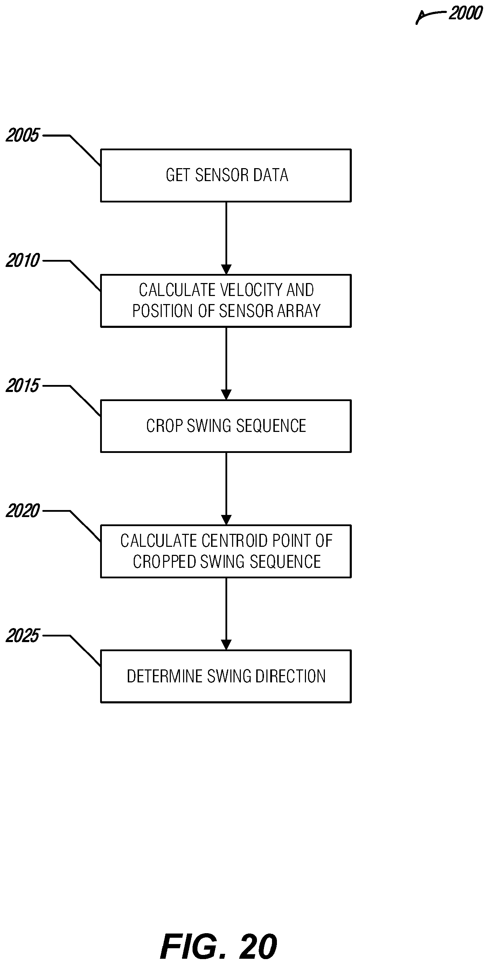

FIG. 20 illustrates an example of a process 2000 for swing direction determination for sensor-derived swing hit and direction detection, according to an embodiment. The process 200 may provide functionality as described in FIGS. 1, 2, 15, and 16. A participant of a sport with a swing component (e.g., baseball, cricket, golf, etc.) may have made a swing (e.g., swung a baseball bat, etc.). The swing may have been detected based on analysis of sensor data (e.g., as described in FIGS. 1-6). The sensor data is processed to determine a direction of the swing. The sensor data (accelerometer data, optionally gyroscope data, etc.) is obtained (e.g., at operation 2005). The velocity and position of a sensor array providing the sensor data are calculated (e.g., at operation 2010). The acceleration integration along time is calculated to determine the velocity and the velocity integration along time is calculated to determine the position of a sensor array providing the sensor data at each time stamp.

The sensor data for the swing sequence may be cropped (e.g., at operation 2015). Considering a real swing action may include a starting phase and an ending phase, the start and end phase data may be excluded from the swing data for robust computation of the swing direction. Some data from the starting and ending phases may be removed. For example, for a sequence with 250 sampling points, sensor data samples with indexes ranging from 50 to 200 may be reserved while those with indexes below 50 and over 200 may be discarded.

A centroid point of the cropped swing sequence may be calculated (e.g., at operation 2020). The centroid o of the cropped points may approximate a body position of the participant. The direction of the swing is determined (e.g., at operation 2025). Assuming points along the trajectory of the swing are noted as $p_1$, $p_2$, ..., $p_n$, a vector from the centroid o to $p_i$ is generated as $v_i$, the vector from $p_i$ to $p_{i+1}$ is generated as $v_{i,i+1}$. The cross $c_i$ of $v_i$ and $v_{i,i+1}$ may be calculated. If $c_i < 0$, the direction from $v_i$ to $v_{i,i+1}$ is clockwise, otherwise, the direction from $v_i$ to $v_{i,i+1}$ is counterclockwise. A positive and negative counter may be maintained for $c_i$ along the cropped swing sequence and the greater counter may be determined to be the swing direction. For example, if the positive counter is greater, the swing may be determined to be counterclockwise (e.g., a right swing) and if the negative counter is greater, the swing may be determined to be clockwise (e.g., a left swing).

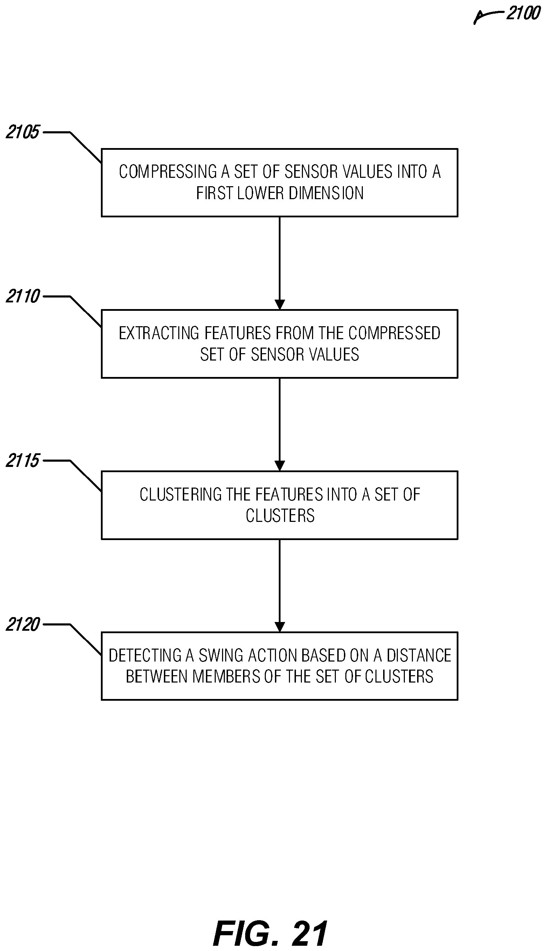

FIG. 21 illustrates an example of a process 2100 for sensor-derived swing hit and direction detection, according to an embodiment. The process 2100 may provide features as described in FIGS. 1-20.

At operation 2105, a set of sensor values may be compressed into a first lower dimension. In an example, sensor readings may be obtained from a sensor array and the set of sensor values may comprise members of the sensor readings on a first side of a threshold. In an example, the sensor array may be included in an article of smart clothing. In an example, a discrete cosine transformation may be applied to the set of sensor values to compress the set of sensor values into the first lower dimension.

At operation 2110, features may be extracted from the compressed set of sensor values. In an example, sorted absolute discrete cosine transform coefficients may be extracted from the compressed set of sensor values. In an example, principal component analysis may be used to compress the sorted absolute discrete cosine transformation coefficients into a second lower dimension.

At operation 2115, the features are clustered into a set of clusters. In an example, the features may be cluster using k-means.

At operation 2120, a swing action is detected based on a distance between members of the set of clusters.

In an example, an active range of the sensor readings may be determined by comparing an amplitude of the sensor readings to an active range threshold. A set of peak values and a set of valley values may be identified in the active range of the sensor readings. In an example, a first amplitude of a first axis, a second amplitude of a second axis, and a third amplitude of a third axis may be obtained from the sensor readings. A first square of the first amplitude, a second square of the second amplitude, and a third square of the third amplitude may be calculated. The amplitude of the sensor readings may be determined by calculating the square root of the sum of the first square, the second square, and the third square. In an example, the active range threshold may be a gravitational force value.

A burst measurement may be calculated for a peak value of the set of peak values based on a maximum of a first difference between the peak value and a first neighbor sensor reading value of sensor readings and a second difference between the peak value and a second neighbor sensor reading value of the sensor readings, the first neighbor sensor reading value being on a first side of the peak value and the second neighbor sensor reading value being on a second side of the peak value.

A peak-valley drop value may be calculated for the peak value by averaging the first difference and the second difference.

A magnitude may be determined for the peak value using a first distance between the peak value and the first neighbor valley value and a second distance between the peak value and the second neighbor valley value.

The peak value may be aligned by summing a first distance between the peak value and a first value and a second distance between the first value and a second value, the peak value being in a first axis, the first value being in a second axis, and the second value being in a third axis.

A time ratio may be calculated for the peak value using a peak value time offset value and an active range time value, the peak value time offset value calculated as a first difference between a first time value corresponding to the peak value and a second time value corresponding to a start point of the active range, the active range time value calculated as a second difference between a third time value corresponding with an end point of the active range and the second time value.

A contact with an object may be determined using the burst measurement, the peak-valley drop value, the magnitude, the aligned peak value, and the time ratio. In an example, a sigmoid function may be applied to the burst measurement and the aligned peak value to determine the contact with the object. In an example, a piecewise linear function may be applied to the peak drop value, the magnitude, and the time ratio to determine the contact with the object.

In an example, a velocity may be determined by calculating an acceleration integration along time using the sensor readings. A set of positions of the sensor array may be identified at corresponding time stamps by calculating a velocity integration along time using the velocity. The set of positions may be reduced using a plurality of thresholds. A centroid of the reduced set of positions is calculated. A first vector is determined from the centroid to a first position of the reduced set of positions. A second vector is determined from the first position to a second position of the reduced set of positions. A cross product of the first vector and the second vector is calculated. A direction of the swing action is determined using the cross product.

In an example, a first set of peak and valley points, a second set of peak and valley points, and a third set of peak and valley points may be identified in the sensor readings. The first set of peak and valley points may correspond to a first axis of the sensor readings. The second set of peak and valley points may correspond to a second axis of the sensor readings. The third set of peak and valley points may correspond to a third axis of the sensor readings. In an example, an active range of the sensor readings may be identified between a first point in time when an amplitude of the sensor readings is above an active range threshold and a last point in time when the amplitude of the sensor readings in above the active range threshold. The first set of peak and valley points, the second set of peak and valley points, and the third set of peak and valley points may be identified in the active range of the sensor readings.

Members of the first set of peak and valley points, the second set of peak and valley points, and the third set of peak and valley points may be filtered to identify a set of contact candidate points.

A contact score may be calculated for each member of the set of contact candidate points using a set of scoring criteria. In an example, the set of scoring criteria may include an alignment measurement. In an example, a first timewise distance and a second timewise distance may be determined for each member of the set of contact candidate points. The first timewise distance may be between the member of the set of contact candidate points along the first axis of the sensor readings and a second member of the set of contact candidate points along the second axis of the sensor readings. The second timewise distance may be between the member of the set of contact candidate points along the first axis of the sensor readings and the third member of the set of contact candidate points along the third axis of the sensor readings. The alignment measurement for the member maybe determined as a sum of the first timewise distance and the second timewise distance. The alignment measurement for each member of the set of contact candidate points may be used with a sigmoid function to determine an alignment score for each member of the set of contact candidate points. The contact score calculation for each member of the set of contact candidate points may use the alignment score

In an example, the set of scoring criteria may include a burst measurement. In an example, a first difference may be identified between a first value of each member of the set of contact candidate points and a second value from the sensor readings for a first point along an axis of the member of the set of contact candidate points and a second difference may be identified between the first value and a third value from the sensor readings for a second point along the axis of the member of the set of contact candidate points. The first point may be immediately prior to the member of the set of contact candidate points and the second point may be immediately subsequent to the member of the set of contact candidate points. The burst measurement may be determined for the member of the set of contact candidate points as a maximum of the first distance and the second difference. The burst measurement for each member of the set of contact candidate points may be used with a sigmoid function to determine a burst score for each member of the set of contact candidate points. The contact score calculation for each member may include using the burst score.

In an example, the set of scoring criteria may include a peak-valley drop measurement. In an example, a first drop may be calculated for each member of the set of contact candidate points between the member of the set of contact candidate points and a second member of the set of contact candidate points and a second drop may be calculated for each member of the set of contact candidate points between the member of the set of contact candidate points and a third member of the set of contact candidate points. The second member of the set of contact candidate points may be immediately prior to the member of the set of contact candidate points along an axis. The third member of the set of contact candidate points may be immediately subsequent to the member of the set of contact candidate points along the axis. The peak-valley drop measurement may be determined for the member of the set of contact candidate points as an average of the first drop and the second drop. The peak-valley drop measurement for each member of the set of contact candidate points may be used with a piecewise linear function to determine a peak-valley score for each member of the set of contact candidate points. The contact score calculation for each member may include using the peak-valley score.

In an example, the set of scoring criteria may include a magnitude measurement. In an example, a first neighbor candidate of the set of contact candidate points and a second neighbor candidate of the set of contact candidate points may be determined for each member of the set of contact candidate points. The first neighbor candidate may be immediately prior to the member on an axis. The second neighbor candidate may be immediately subsequent to the member on the axis. A first distance may be calculated between the member and the first neighbor candidate and a second distance may be calculated between the member and the second neighbor candidate. A minimum distance value may be determined as a minimum of the first distance and the second distance. The magnitude measurement may be calculated as an area in a direction from the member to first neighbor candidate with a magnitude range of twice the minimum distance value plus one. The magnitude measurement for each member of the set of contact candidate points may be used with a piecewise linear function to determine a magnitude score for each member of the set of contact candidate points. The contact score calculation for each member may include using the magnitude score.

In an example, the set of scoring criteria may include a time ratio measurement. In an example, an active range of the sensor readings may be identified between a first point in time when an amplitude of the sensor readings is above an active range threshold and a last point in time when the amplitude of the sensor readings is above the active range threshold. An active range time may be calculated as a difference between a first time value corresponding to the last point in time and a second time value corresponding to the first point in time. A member of the set of contact candidate points may be identified as corresponding to contact with an object based on the contact score for the member of the set of contact candidate points being outside of a threshold. A time offset may be calculated for each member of the set of contact candidate points as a difference between the third time value corresponding to the member and the first time value. The time ratio measurement may be calculated as the quotient of the time offset and the active range time. The time ratio measurement for each member of the set of contact candidate points may be used with a piecewise linear function to determine a time ratio score for each member of the set of contact candidate points. The contact score calculation for each member may include using the time ratio score.

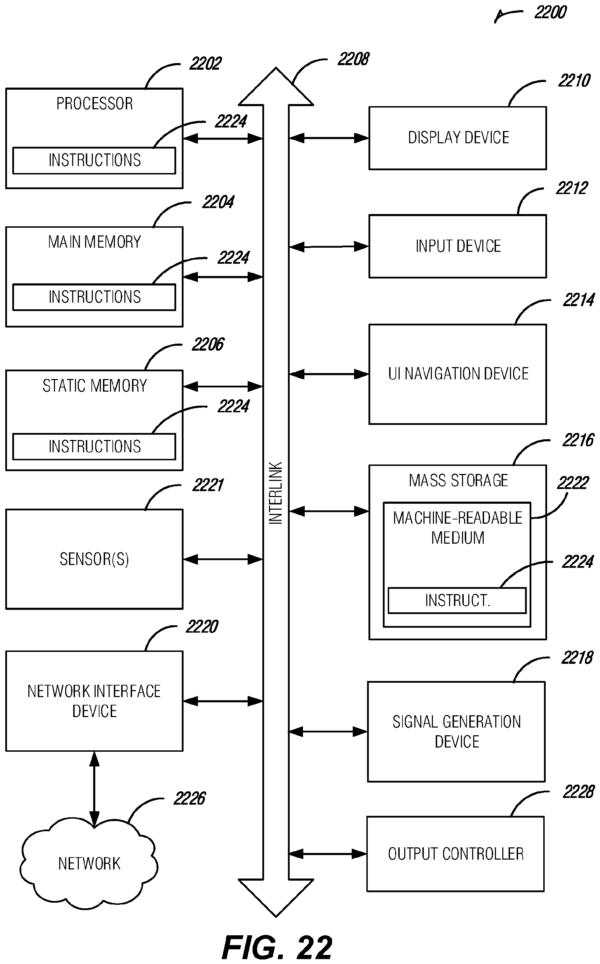

FIG. 22 illustrates a block diagram of an example machine 2200 upon which any one or more of the techniques (e.g., methodologies) discussed herein may perform. In alternative embodiments, the machine 2200 may operate as a standalone device or may be connected (e.g., networked) to other machines. In a networked deployment, the machine 2200 may operate in the capacity of a server machine, a client machine, or both in server-client network environments. In an example, the machine 2200 may act as a peer machine in peer-to-peer (P2P) (or other distributed) network environment. The machine 2200 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuit sets are a collection of circuits implemented in tangible entities that include hardware (e.g., simple circuits, gates, logic, etc.). Circuit set membership may be flexible over time and underlying hardware variability. Circuit sets include members that may, alone or in combination, perform specified operations when operating. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

Machine (e.g., computer system) 2200 may include a hardware processor 2202 (e.g., a central processing unit (CPU), a graphics processing unit (GPU), a hardware processor core, or any combination thereof), a main memory 2204 and a static memory 2206, some or all of which may communicate with each other via an interlink (e.g., bus) 2208. The machine 2200 may further include a display unit 2210, an alphanumeric input device 2212 (e.g., a keyboard), and a user interface (UI) navigation device 2214 (e.g., a mouse). In an example, the display unit 2210, input device 2212 and UI navigation device 2214 may be a touch screen display. The machine 2200 may additionally include a storage device (e.g., drive unit) 2216, a signal generation device 2218 (e.g., a speaker), a network interface device 2220, and one or more sensors 2221, such as a global positioning system (GPS) sensor, compass, accelerometer, or other sensor. The machine 2200 may include an output controller 2228, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 2216 may include a machine readable medium 2222 on which is stored one or more sets of data structures or instructions 2224 (e.g., software) embodying or utilized by any one or more of the techniques or functions described herein. The instructions 2224 may also reside, completely or at least partially, within the main memory 2204, within static memory 2206, or within the hardware processor 2202 during execution thereof by the machine 2200. In an example, one or any combination of the hardware processor 2202, the main memory 2204, the static memory 2206, or the storage device 2216 may constitute machine readable media.

While the machine readable medium 2222 is illustrated as a single medium, the term "machine readable medium" may include a single medium or multiple media (e.g., a centralized or distributed database, and/or associated caches and servers) configured to store the one or more instructions 2224.

The term "machine readable medium" may include any medium that is capable of storing, encoding, or carrying instructions for execution by the machine 2200 and that cause the machine 2200 to perform any one or more of the techniques of the present disclosure, or that is capable of storing, encoding or carrying data structures used by or associated with such instructions. Non-limiting machine readable medium examples may include solid-state memories, and optical and magnetic media. In an example, a massed machine readable medium comprises a machine readable medium with a plurality of particles having invariant (e.g., rest) mass. Accordingly, massed machine-readable media are not transitory propagating signals. Specific examples of massed machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 2224 may further be transmitted or received over a communications network 2226 using a transmission medium via the network interface device 2220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, peer-to-peer (P2P) networks, among others. In an example, the network interface device 2220 may include one or more physical jacks (e.g., Ethernet, coaxial, or phone jacks) or one or more antennas to connect to the communications network 2226. In an example, the network interface device 2220 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 2200, and includes digital or analog communications signals or other intangible medium to facilitate communication of such software.

## Claims

1. A method for sensor-derived swing action detection, the method comprising:

   compressing a set of acceleration sensor values of a sensor array (115) included in an article of clothing (130) into a first lower dimension;
   extracting features from the compressed set of acceleration sensor values;
   clustering the features into a set of clusters;
   detecting a swing action based on a distance between members of the set of clusters;
   determining a velocity by calculating an integration along a time using acceleration sensor values representative of the swing action;
   identifying a set of positions of the sensor array (115) at corresponding time stamps by calculating a velocity integration along the time using the velocity;
   reducing the set of positions using a plurality of sensor array (115) output signal thresholds, including discarding relatively low acceleration sensor values and/or acceleration sensor values that demonstrate a large variance;
   calculating a centroid (1615) of the reduced set of positions;
   determining a first vector (1620) from the centroid (1615) to a first position (1605) of the reduced set of positions;
   determining a second vector (1625) from the first position (1605) to a second position (1610) succeeding the first position (1605) of the reduced set of positions;
   calculating a cross product of the first vector (1620) and the second vector (1625); and
   determining a direction of the swing action using the cross product.

2. The method of claim 1, wherein the compressing the set of acceleration sensor values into the first lower dimension further comprises applying a discrete cosine transformation to the set of acceleration sensor values.

3. The method of claim 2, wherein extracting the features from the compressed set of acceleration sensor values further comprises extracting sorted absolute discrete cosine transformation coefficients.

4. The method of claim 3, wherein extracting the features from the compressed set of acceleration sensor values further comprises using principal component analysis to compress the sorted absolute discrete cosine transformation coefficients into a second lower dimension.

5. The method of claim 1, further comprising:

   identifying a first set of peak (930A) and valley (935A) points, a second set of peak (930B) and valley (935B) points, and a third set of peak (930C) and valley (935C) points in the sensor readings, the first set of peak and valley points corresponding to a first axis of the sensor readings, the second set of peak and valley points corresponding to a second axis of the sensor readings, the third set of peak and valley points corresponding to a third axis of the sensor readings;
   filtering members of the first set of peak and valley points, the second set of peak and valley points, and the third set of peak and valley points to identify a set of contact candidate points;
   calculating a contact score for each member of the set of contact candidate points using a set of scoring criteria; and
   identifying a member of the set of contact candidate points as corresponding to contact with an object based on the contact score for the member of the set of contact candidate points being outside of a threshold.

6. The method of claim 5, wherein identifying the first set of peak (930A) and valley (935A) points, the second set of peak (930B) and valley (935B) points, and the third set of peak (930C) and valley (935C) points in the sensor readings further comprises:
   identifying an active range of the sensor readings between a first point in time when an amplitude of the sensor readings is above an active range threshold and a last point in time when the amplitude of the sensor readings is above the active range threshold, wherein the first set of peak and valley points, the second set of peak and valley points, and the third set of peak and valley points are identified in the active range of the sensor readings.

7. The method of claim 5, wherein the set of scoring criteria includes an alignment measurement (1300) and calculating a contact score for each member of the set of contact candidate points further comprises:

   determining a first timewise distance and a second timewise distance for each member of the set of contact candidate points, the first timewise distance being between the member of the set of contact candidate points along the first axis of the sensor readings and a second member of the set of contact candidate points along the second axis of the sensor readings, the second timewise distance being between the member of the set of contact candidate points along the first axis of the sensor readings and the third member of the set of contact candidate points along the third axis of the sensor readings;
   determining the alignment measurement (1300) for the member as a sum of the first timewise distance and the second timewise distance; and using the alignment measurement (1300) for each member of the set of contact candidate points with a sigmoid function to determine an alignment score for each member of the set of contact candidate points, wherein calculating the contact score for each member of the set of contact candidate points uses the alignment score.

8. The method of claim 5, wherein the set of scoring criteria includes a burst measurement (1000) and calculating a contact score for each member of the set of contact candidate points further comprises:

identifying a first difference between a first value of each member of the set of contact candidate points and a second value from the sensor readings for a first point along an axis of the member of the set of contact candidate points and a second difference between the first value and a third value from the sensor readings for a second point along the axis of the member of the set of contact candidate points, the first point immediately prior to the member of the set of contact candidate points and the second point immediately subsequent to the member of the set of contact candidate points;
determining the burst measurement (1000) for the member of the set of contact candidate points as a maximum of the first distance and the second difference; and
using the burst measurement (1000) for each member of the set of contact candidate points with a sigmoid function to determine a burst score for each member of the set of contact candidate points, wherein calculating the contact score for each member includes using the burst score.

9. The method of claim 5, wherein the set of scoring criteria includes a peak-valley drop (1100) measurement and calculating the contact score for each member of the set of contact candidate points further comprises:

calculating, for each member of the set of contact candidate points, a first drop between the member of the set of contact candidate points and a second member of the set of contact candidate points and a second drop between the member of the set of contact candidate points and a third member of the set of contact candidate points, the second member of the set of contact candidate points being immediately prior to the member of the set of contact candidate points along an axis, the third member of the set of contact candidate points being immediately subsequent to the member of the set of contact candidate points along the axis;
determining the peak-valley drop (1100) measurement for the member of the set of contact candidate points as an average of the first drop and the second drop; and
using the peak-valley drop (1100) measurement for each member of the set of contact candidate points with a piecewise linear function to determine a peak-valley score for each member of the set of contact candidate points, wherein calculating the contact score for each member of the set of contact candidate points includes using the peak-valley score.

10. The method of claim 5, wherein the set of scoring criteria includes a time ratio measurement and calculating the contact score for each member of the set of contact candidate points further comprises:

identifying an active range of the sensor readings between a first point in time when an amplitude of the sensor readings is above an active range threshold and a last point in time when the amplitude of the sensor readings is above the active range threshold;
calculating an active range time as a difference between a first time value corresponding to the last point in time and a second time value corresponding to the first point in time;
calculating, for each member of the set of contact candidate points, a time offset as a difference between the third time value corresponding to the member and the first time value;
calculating the time ratio measurement as the quotient of the time offset and the active range time; and
using the time ratio measurement for each member of the set of contact candidate points with a piecewise linear function to determine a time ratio score for each member of the set of contact candidate points, wherein calculating the contact score for each member of the set of contact candidate points includes using the time ratio score.

11. A system to implement sensor-derived swing action detection, the system comprising means to perform any method of claims 1-10.

12. At least one machine readable medium to implement sensor-derived swing action detection, the at least one machine readable medium including instructions that, when executed by a machine, cause the machine to perform any method of claims 1-10.

**Patentansprüche**

1. Verfahren für eine von einem Sensor abgeleitete Schwungaktionsdetektion, das Verfahren umfassend:

   Komprimieren eines Satzes von Beschleunigungssensorwerten einer Sensoranordnung (115), die in einem Kleidungsstück (130) enthalten ist, in eine erste untere Dimension;
   Extrahieren von Merkmalen aus dem komprimierten Satz von Beschleunigungssensorwerten;
   Clustern der Merkmale in einen Satz von Clustern;
   Detektieren einer Schwungaktion basierend auf einem Abstand zwischen Elementen des Satzes von Clustern;
   Bestimmen einer Geschwindigkeit durch Berechnen einer Integration entlang einer Zeit unter Verwendung von Beschleunigungssensorwerten, die die Schwungaktion darstellen;
   Identifizieren eines Satzes von Positionen der Sensoranordnung (115) an entsprechenden Zeitstempeln durch Berechnen einer Geschwindigkeitsintegration entlang der Zeit unter Verwendung der Geschwindigkeit;
   Reduzieren des Satzes von Positionen unter Verwendung einer Vielzahl von Ausgangssignalschwellwerten der Sensoranordnung (115), einschließlich eines Verwerfens von verhältnismäßig niedrigen Beschleunigungssensorwerten und/oder Beschleunigungssensorwerten, die eine große Varianz aufweisen;
   Berechnen eines Schwerpunkts (1615) des reduzierten Satzes von Positionen;
   Bestimmen eines ersten Vektors (1620) von dem Schwerpunkt (1615) zu einer ersten Position (1605) des reduzierten Satzes von Positionen;
   Bestimmen eines zweiten Vektors (1625) von der ersten Position (1605) zu einer zweiten Position (1610), die auf die erste Position (1605) des reduzierten Satzes von Positionen folgt;
   Berechnen eines Kreuzprodukts des ersten Vektors (1620) und des zweiten Vektors (1625) und
   Bestimmen einer Richtung der Schwungaktion unter Verwendung des Kreuzprodukts.

2. Verfahren nach Anspruch 1, wobei das Komprimieren des Satzes von Beschleunigungssensorwerten in die erste untere Dimension ferner ein Anwenden einer diskreten Cosinustransformation auf den Satz von Beschleunigungssensorwerten umfasst.

3. Verfahren nach Anspruch 2, wobei das Extrahieren der Merkmale aus dem komprimierten Satz von Beschleunigungssensorwerten ferner ein Extrahieren von sortierten absoluten Koeffizienten einer diskreten Cosinustransformation umfasst.

4. Verfahren nach Anspruch 3, wobei das Extrahieren der Merkmale aus dem komprimierten Satz von Beschleunigungssensorwerten ferner ein Verwenden einer Hauptkomponentenanalyse zum Komprimieren der sortierten absoluten Koeffizienten einer diskreten Cosinustransformation in eine zweite untere Dimension umfasst.

5. Verfahren nach Anspruch 1, ferner umfassend:

   Identifizieren eines ersten Satzes von Punkten für eine Spitze (930A) und ein Tal (935A), eines zweiten Satzes von Punkten für eine Spitze (930B) und ein Tal (935B) und eines dritten Satzes von Punkten für eine Spitze (930C) und ein Tal (935C) in den Sensormesswerten, wobei der erste Satz von Spitzen- und Talpunkten einer ersten Achse der Sensormesswerte entspricht, der zweite Satz von Spitzen- und Talpunkten einer zweiten Achse der Sensormesswerte entspricht, der dritte Satz von Spitzen- und Talpunkten einer dritten Achse der Sensormesswerte entspricht;
   Filtern von Elementen des ersten Satzes von Spitzen- und Talpunkten, des zweiten Satzes von Spitzen- und Talpunkten und des dritten Satzes von Spitzen- und Talpunkten zum Identifizieren eines Satzes von möglichen Kontaktpunkten;
   Berechnen einer Kontaktbewertung für jedes Element des Satzes von möglichen Kontaktpunkten unter Verwendung eines Satzes von Bewertungskriterien und
   Identifizieren eines Elements des Satzes von möglichen Kontaktpunkten als einem Kontakt mit einem Objekt entsprechend, basierend darauf, dass die Kontaktbewertung für das Element des Satzes von möglichen Kontaktpunkten außerhalb einer Schwelle ist.

6. Verfahren nach Anspruch 5, wobei das Identifizieren des ersten Satzes von Punkten für eine Spitze (930A) und ein Tal (935A), des zweiten Satzes von Punkten für eine Spitze (930B) und ein Tal (935B) und des dritten Satzes von Punkten für eine Spitze (930C) und ein Tal (935C) in den Sensormesswerten ferner umfasst:
   Identifizieren eines aktiven Bereichs der Sensormesswerte zwischen einem ersten Zeitpunkt, wenn eine Amplitude der Sensormesswerte oberhalb einer Schwelle des aktiven Bereichs ist, und einem letzten Zeitpunkt, wenn die Amplitude der Sensormesswerte oberhalb der Schwelle des aktiven Bereichs ist, wobei der erste Satz von Spitzen- und Talpunkten, der zweite Satz von Spitzen- und Talpunkten und der dritte Satz von Spitzen- und Talpunkten im aktiven Bereich der Sensormesswerte identifiziert werden.

7. Verfahren nach Anspruch 5, wobei der Satz von Bewertungskriterien eine Ausrichtungsmessung (1300) einschließt und das Berechnen einer Kontaktbewertung für jedes Element des Satzes von möglichen Kontaktpunkten ferner umfasst:

Bestimmen eines ersten zeitlichen Abstands und eines zweiten zeitlichen Abstands für jedes Element des Satzes von möglichen Kontaktpunkten, wobei der erste zeitliche Abstand zwischen dem Element des Satzes von möglichen Kontaktpunkten entlang der ersten Achse der Sensormesswerte und einem zweiten Element des Satzes von möglichen Kontaktpunkten entlang der zweiten Achse der Sensormesswerte ist, der zweite zeitliche Abstand zwischen dem Element des Satzes von möglichen Kontaktpunkten entlang der ersten Achse der Sensormesswerte und dem dritten Element des Satzes von möglichen Kontaktpunkten entlang der dritten Achse der Sensormesswerte ist; Bestimmen der Ausrichtungsmessung (1300) für das Element als eine Summe des ersten zeitlichen Abstands und des zweiten zeitlichen Abstands und Verwenden der Ausrichtungsmessung (1300) für jedes Element des Satzes von möglichen Kontaktpunkten mit einer Sigmoid-Funktion zum Bestimmen einer Ausrichtungsbewertung für jedes Element des Satzes von möglichen Kontaktpunkten, wobei das Berechnen der Kontaktbewertung für jedes Element des Satzes von möglichen Kontaktpunkten die Ausrichtungsbewertung verwendet.

8. Verfahren nach Anspruch 5, wobei der Satz von Bewertungskriterien eine Burst-Messung (1000) einschließt und das Berechnen einer Kontaktbewertung für jedes Element des Satzes von möglichen Kontaktpunkten ferner umfasst:

Identifizieren einer ersten Differenz zwischen einem ersten Wert jedes Elements des Satzes von möglichen Kontaktpunkten und einem zweiten Wert aus den Sensormesswerten für einen ersten Punkt entlang einer Achse des Elements des Satzes von möglichen Kontaktpunkten und einer zweiten Differenz zwischen dem ersten Wert und einem dritten Wert aus den Sensormesswerten für einen zweiten Punkt entlang der Achse des Elements des Satzes von möglichen Kontaktpunkten, wobei der erste Punkt unmittelbar vor dem Element des Satzes von möglichen Kontaktpunkten ist und der zweite Punkt unmittelbar nach dem Element des Satzes von möglichen Kontaktpunkten ist; Bestimmen der Burst-Messung (1000) für das Element des Satzes von möglichen Kontaktpunkten als ein Maximum des ersten Abstands und der zweiten Differenz und Verwenden der Burst-Messung (1000) für jedes Element des Satzes von möglichen Kontaktpunkten mit einer Sigmoid-Funktion zum Bestimmen einer Burst-Bewertung für jedes Element des Satzes von möglichen Kontaktpunkten, wobei das Berechnen der Kontaktbewertung für jedes Element ein Verwenden der Burst-Bewertung einschließt.

9. Verfahren nach Anspruch 5, wobei der Satz von Bewertungskriterien eine Messung eines Spitze-Tal-Abfalls (1100) einschließt und das Berechnen der Kontaktbewertung für jedes Element des Satzes von möglichen Kontaktpunkten ferner umfasst:

Berechnen, für jedes Element des Satzes von möglichen Kontaktpunkten, eines ersten Abfalls zwischen dem Element des Satzes von möglichen Kontaktpunkten und einem zweiten Element des Satzes von möglichen Kontaktpunkten und eines zweiten Abfalls zwischen dem Element des Satzes von möglichen Kontaktpunkten und einem dritten Element des Satzes von möglichen Kontaktpunkten, wobei das zweite Element des Satzes von möglichen Kontaktpunkten unmittelbar vor dem Element des Satzes von möglichen Kontaktpunkten entlang einer Achse ist, das dritte Element des Satzes von möglichen Kontaktpunkten unmittelbar nach dem Element des Satzes von möglichen Kontaktpunkten entlang der Achse ist; Bestimmen der Messung eines Spitze-Tal-Abfalls (1100) für das Element des Satzes von möglichen Kontaktpunkten als einen Durchschnitt des ersten Abfalls und des zweiten Abfalls und Verwenden der Messung eines Spitze-Tal-Abfalls (1100) für jedes Element des Satzes von möglichen Kontaktpunkten mit einer stückweise linearen Funktion zum Bestimmen einer Spitze-Tal-Bewertung für jedes Element des Satzes von möglichen Kontaktpunkten, wobei das Berechnen der Kontaktbewertung für jedes Element des Satzes von möglichen Kontaktpunkten ein Verwenden der Spitze-Tal-Bewertung einschließt.

10. Verfahren nach Anspruch 5, wobei der Satz von Bewertungskriterien eine Zeitverhältnismessung einschließt und das Berechnen der Kontaktbewertung für jedes Element des Satzes von möglichen Kontaktpunkten ferner umfasst:

Identifizieren eines aktiven Bereichs der Sensormesswerte zwischen einem ersten Zeitpunkt, wenn eine Amplitude der Sensormesswerte oberhalb einer Schwelle des aktiven Bereichs ist, und einem letzten Zeitpunkt, wenn die Amplitude der Sensormesswerte oberhalb der Schwelle des aktiven Bereichs ist;

Berechnen einer Zeit des aktiven Bereichs als eine Differenz zwischen einem ersten Zeitwert, der dem letzten Zeitpunkt entspricht, und einem zweiten Zeitwert, der dem ersten Zeitpunkt entspricht;

Berechnen, für jedes Element des Satzes von möglichen Kontaktpunkten, eines Zeitversatzes als eine Differenz zwischen dem dritten Zeitwert, der dem Element entspricht, und dem ersten Zeitwert;

Berechnen der Zeitverhältnismessung als den Quotienten des Zeitversatzes und der Zeit des aktiven Bereichs; und Verwenden der Zeitverhältnismessung für jedes Element des Satzes von möglichen Kontaktpunkten mit einer stückweise linearen Funktion zum Bestimmen einer Zeitverhältnisbewertung für jedes Element des Satzes von möglichen Kontaktpunkten, wobei das Berechnen der Kontaktbewertung für jedes Element des Satzes von möglichen Kontaktpunkten ein Verwenden der Zeitverhältnisbewertung einschließt.

11. System zum Implementieren einer von einem Sensor abgeleiteten Schwungaktionsdetektion, das System umfassend ein Mittel zum Durchführen eines Verfahrens nach einem der Ansprüche 1-10.

12. Mindestens ein maschinenlesbares Medium zum Implementieren einer von einem Sensor abgeleiteten Schwungaktionsdetektion, das mindestens eine maschinenlesbare Medium einschließlich Anweisungen, die, bei Ausführung durch ein Maschine, die Maschine zum Durchführen eines Verfahrens nach einem der Ansprüche 1-10 veranlassen.

## Revendications

1. Procédé de détection d'action de swing déduite de capteurs, le procédé comportant les étapes consistant à :

compresser un ensemble de valeurs de capteurs d'accélération d'un réseau (115) de capteurs compris dans un article vestimentaire (130) en une première dimension plus basse ;
extraire des caractéristiques de l'ensemble compressé de valeurs de capteurs d'accélération ;
regrouper les caractéristiques en un ensemble de groupes ;
détecter une action de swing d'après une distance entre des membres de l'ensemble de groupes ;
déterminer une vitesse en calculant une intégration par rapport à un temps à l'aide de valeurs de capteurs d'accélération représentatives de l'action de swing ;
identifier un ensemble de positions du réseau (115) de capteurs à des estampilles temporelles correspondantes en calculant une intégration de vitesse par rapport au temps à l'aide de la vitesse ;
réduire l'ensemble de positions à l'aide d'une pluralité de seuils de signal de sortie du réseau (115) de capteurs, ce qui comprend l'élimination de valeurs de capteurs d'accélération relativement faibles et/ou de valeurs de capteurs d'accélération qui présentent une variance importante ;
calculer un centroïde (1615) de l'ensemble réduit de positions ;
déterminer un premier vecteur (1620) allant du centroïde (1615) à une première position (1605) de l'ensemble réduit de positions ;
déterminer un deuxième vecteur (1625) allant de la première position (1605) à une deuxième position (1610) qui succède à la première position (1605) de l'ensemble réduit de positions ;
calculer un produit vectoriel du premier vecteur (1620) et du deuxième vecteur (1625) ; et
déterminer une direction de l'action de swing à l'aide du produit vectoriel.

2. Procédé selon la revendication 1, la compression de l'ensemble de valeurs de capteurs d'accélération en la première dimension plus basse comportant en outre l'application d'une transformée en cosinus discrète à l'ensemble de valeurs de capteurs d'accélération.

3. Procédé selon la revendication 2, l'extraction des caractéristiques à partir de l'ensemble compressé de valeurs de capteurs d'accélération comportant en outre l'extraction de coefficients absolus triés de transformée en cosinus discrète.

4. Procédé selon la revendication 3, l'extraction des caractéristiques à partir de l'ensemble compressé de valeurs de capteurs d'accélération comportant en outre l'utilisation d'une analyse en composantes principales pour compresser les coefficients absolus triés de transformée en cosinus discrète en une deuxième dimension plus basse.

5. Procédé selon la revendication 1, comportant en outre les étapes consistant à :

identifier un premier ensemble de points de crête (930A) et de creux (935A), un deuxième ensemble de points de crête (930B) et de creux (935B), et un troisième ensemble de points de crête (930C) et de creux (935C) dans les indications de capteurs, le premier ensemble de points de crête et de creux correspondant à un premier axe des indications de capteurs, le deuxième ensemble de points de crête et de creux correspondant à un deuxième axe des indications de capteurs, le troisième ensemble de points de crête et de creux correspondant à un troisième axe des indications de capteurs ;

filtrer des membres du premier ensemble de points de crête et de creux, du deuxième ensemble de points de crête et de creux et du troisième ensemble de points de crête et de creux pour identifier un ensemble de points de contact candidats ;

calculer un score de contact pour chaque membre de l'ensemble de points de contact candidats à l'aide d'un ensemble de critères de notation ; et

identifier un membre de l'ensemble de points de contact candidats comme correspondant à un contact avec un objet sur la base du fait que le score de contact pour le membre de l'ensemble de points de contact candidats se trouve en dehors d'un seuil.

6. Procédé selon la revendication 5, l'identification du premier ensemble de points de crête (930A) et de creux (935A), du deuxième ensemble de points de crête (930B) et de creux (935B) et du troisième ensemble de points de crête (930C) et de creux (935C) dans les indications de capteurs comportant en outre :

l'identification d'une plage active des indications de capteurs entre un premier instant où une amplitude des indications de capteurs est supérieure à un seuil de plage active et un dernier instant où l'amplitude des indications de capteurs est supérieure au seuil de plage active, le premier ensemble de points de crête et de creux, le deuxième ensemble de points de crête et de creux et le troisième ensemble de points de crête et de creux étant identifiés dans la plage active des indications de capteurs.

7. Procédé selon la revendication 5, l'ensemble de critères de notation comprenant une mesure (1300) d'alignement et le calcul d'un score de contact pour chaque membre de l'ensemble de points de contact candidats comportant en outre les étapes consistant à :

déterminer une première distance temporelle et une deuxième distance temporelle pour chaque membre de l'ensemble de points de contact candidats, la première distance temporelle étant entre le membre de l'ensemble de points de contact candidats le long du premier axe des indications de capteurs et un deuxième membre de l'ensemble de points de contact candidats le long du deuxième axe des indications de capteurs, la deuxième distance temporelle étant entre le membre de l'ensemble de points de contact candidats le long du premier axe des indications de capteurs et le troisième membre de l'ensemble de points de contact candidats le long du troisième axe des indications de capteurs ;

déterminer la mesure (1300) d'alignement pour le membre comme une somme de la première distance temporelle et de la deuxième distance temporelle ; et

utiliser la mesure (1300) d'alignement pour chaque membre de l'ensemble de points de contact candidats avec une fonction sigmoïde afin de déterminer un score d'alignement pour chaque membre de l'ensemble de points de contact candidats, le calcul du score de contact pour chaque membre de l'ensemble de points de contact candidats utilisant le score d'alignement.

8. Procédé selon la revendication 5, l'ensemble de critères de notation comprenant une mesure (1000) de salve et le calcul d'un score de contact pour chaque membre de l'ensemble de points de contact candidats comportant en outre les étapes consistant à :

identifier une première différence entre une première valeur de chaque membre de l'ensemble de points de contact candidats et une deuxième valeur provenant des indications de capteurs pour un premier point le long d'un axe du membre de l'ensemble de points de contact candidats et une deuxième différence entre la première valeur et une troisième valeur provenant des indications de capteurs pour un deuxième point le long de l'axe du membre de l'ensemble de points de contact candidats, le premier point précédant immédiatement le membre de l'ensemble de points de contact candidats et le deuxième point suivant immédiatement le membre de l'ensemble de points de contact candidats ;

déterminer la mesure (1000) de salve pour le membre de l'ensemble de points de contact candidats comme un maximum de la première distance et de la deuxième différence ; et

utiliser la mesure (1000) de salve pour chaque membre de l'ensemble de points de contact candidats avec une fonction sigmoïde afin de déterminer un score de salve pour chaque membre de l'ensemble de points de contact candidats, le calcul du score de contact pour chaque membre comprenant l'utilisation du score de salve.

9. Procédé selon la revendication 5, l'ensemble de critères de notation comprenant une mesure de chute crête-creux (1100) et le calcul du score de contact pour chaque membre de l'ensemble de points de contact candidats comportant en outre les étapes consistant à :

calculer, pour chaque membre de l'ensemble de points de contact candidats, une première chute entre le membre de l'ensemble de points de contact candidats et un deuxième membre de l'ensemble de points de contact candidats et une deuxième chute entre le membre de l'ensemble de points de contact candidats et un troisième membre de l'ensemble de points de contact candidats, le deuxième membre de l'ensemble de points de contact candidats se trouvant immédiatement avant le membre de l'ensemble de points de contact candidats le long d'un axe, le troisième membre de l'ensemble de points de contact candidats se trouvant immédiatement après le membre de l'ensemble de points de contact candidats le long de l'axe ;

déterminer la mesure de chute crête-creux (1100) pour le membre de l'ensemble de points de contact candidats comme une moyenne de la première chute et de la deuxième chute ; et utiliser la mesure de chute crête-creux (1100) pour chaque membre de l'ensemble de points de contact candidats avec une fonction linéaire par morceaux afin de déterminer un score crête-creux pour chaque membre de l'ensemble de points de contact candidats, le calcul du score de contact pour chaque membre de l'ensemble de points de contact candidats comprenant l'utilisation du score crête-creux.

10. Procédé selon la revendication 5, l'ensemble de critères de notation comprenant une mesure de rapport de temps et le calcul du score de contact pour chaque membre de l'ensemble de points de contact candidats comportant en outre les étapes consistant à :

identifier une plage active des indications de capteurs entre un premier instant où une amplitude des indications de capteurs est supérieure à un seuil de plage active et un dernier instant où l'amplitude des indications de capteurs est supérieure au seuil de plage active ;

calculer un temps de plage active comme une différence entre une première valeur de temps correspondant au dernier instant et une deuxième valeur de temps correspondant au premier instant ;

calculer, pour chaque membre de l'ensemble de points de contact candidats, un décalage temporel comme une différence entre la troisième valeur de temps correspondant au membre et la première valeur de temps ; calculer la mesure de rapport de temps comme le quotient du décalage temporel et du temps de plage active ; et utiliser la mesure de rapport de temps pour chaque membre de l'ensemble de points de contact candidats avec une fonction linéaire par morceaux afin de déterminer un score de rapport de temps pour chaque membre de l'ensemble de points de contact candidats, le calcul du score de contact pour chaque membre de l'ensemble de points de contact candidats comprenant l'utilisation du score de rapport de temps.

11. Système servant à mettre en oeuvre une détection d'action de swing déduite de capteurs, le système comportant des moyens servant à réaliser un procédé quelconque selon les revendications 1 à 10.

12. Au moins un support lisible par machine servant à mettre en oeuvre une détection d'action de swing déduite de capteurs, le ou les supports lisibles par machine comprenant des instructions qui, lorsqu'elles sont exécutées par une machine, amènent la machine à réaliser un procédé quelconque selon les revendications 1 à 10.

**FIG. 1**

**FIG. 2**

FIG. 3

**FIG. 4**

FIG. 5

600

**FIG. 6**

**FIG. 7**

EP 3 679 567 B1

**FIG. 8**

**FIG. 9**

**FIG. 10**

**FIG. 11**

**FIG. 12**

*FIG. 13*

**FIG. 14**

EP 3 679 567 B1

FIG. 15

1600

1605 · 1610 · 1625 · 1620 · 1615

**FIG. 16**

1700

1705 — OBTAIN SENSOR DATA

1710 — SWING DETECTED

NO

YES

1715 — DETECT HIT

1720 — DETECT SWING DIRECTION

1725 — OUTPUT DATA

*FIG. 17*

1800

1805 —— REMOVE OBVIOUS NON-SWING SIGNALS

1810 —— COMPRESS DATA

1815 —— EXTRACT FEATURES

1820 —— DISTINGUISH SWING ACTION  USING CLUSTERING

**FIG. 18**

FIG. 19

2000

2005 — GET SENSOR DATA

2010 — CALCULATE VELOCITY AND
POSITION OF SENSOR ARRAY

2015 — CROP SWING SEQUENCE

2020 — CALCULATE CENTROID POINT OF
CROPPED SWING SEQUENCE

2025 — DETERMINE SWING DIRECTION

**FIG. 20**

2100

2105 — COMPRESSING A SET OF SENSOR VALUES INTO A FIRST LOWER DIMENSION

2110 — EXTRACTING FEATURES FROM THE COMPRESSED SET OF SENSOR VALUES

2115 — CLUSTERING THE FEATURES INTO A SET OF CLUSTERS

2120 — DETECTING A SWING ACTION BASED ON A DISTANCE BETWEEN MEMBERS OF THE SET OF CLUSTERS

*FIG. 21*

**FIG. 22**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170061817 A1

**Non-patent literature cited in the description**

- **D. BIWAS et al.** *Human Movement Science,* 2015, vol. 40, 59-76

- **Z. HE et al.** *Processing of the 2009 IEEE Int. Conf. on Systems, Man and Cybernetics*